# FASCICULE DE BREVET EUROPEEN

(11) **EP 4 039 655 B1**
(45) Date de publication et mention de la délivrance du brevet: **03.07.2024**
(21) Numéro de dépôt: 22154591.6
(22) Date de dépôt: 01.02.2022
(51) Int. Cl.: C02F 1/28, C02F 1/467, B01J 20/20, B01J 20/28, B01J 20/34, C02F 1/461, C02F 101/30

(54) **RÉACTEUR PERMETTANT LA FILTRATION EN CONTINU D'UN FLUIDE EN ÉCOULEMENT À TRAVERS D'UN FILTRE ET AVEC UNE RÉGÉNÉRATION ÉLECTROCHIMIQUE IN SITU DU FILTRE**
REAKTOR, DER DIE KONTINUIERLICHE FILTRATION EINER DURCH EINEN FILTER FLIESSENDEN FLÜSSIGKEIT ERMÖGLICHT UND EINE ELEKTROCHEMISCHE REGENERATION DES FILTERS IN SITU UMFASST
REACTOR ALLOWING THE CONTINUOUS FILTERING OF A FLUID FLOWING THROUGH A FILTER AND WITH AN ON-SITE ELECTROCHEMICAL REGENERATION OF THE FILTER

(30) Priorité: 05.02.2021 FR 2101151
(43) Date de publication de la demande: 10.08.2022
(73) Titulaire: Université Gustave Eiffel, 77420 Champs-Sur-Marne (FR)
(72) Inventeur: TRELLU, Clément, 94360 Bry-sur-Marne (FR); OTURAN, Nihal, 94350 Villiers sur Marne (FR); PECHAUD, Yoan, 92140 Clamart (FR); OTURAN, Mehmet A., 94350 Villiers sur Marne (FR)
(74) Mandataire: Demulsant, Xavier

(56) Documents cités:
- EP-A1- 0 141 780
- WO-A1-2019/175038
- US-A1- 2012 234 763
- US-A1- 2012 241 383
- US-B1- 6 391 185

## Description

### DOMAINE DE L'INVENTION

La présente invention concerne un réacteur permettant la filtration frontale en continu d'un fluide en écoulement pour l'adsorption de polluants sur un filtre, et une électrolyse pour la régénération électrochimique in situ du filtre et l'élimination des polluants organiques.

### ETAT DE LA TECHNIQUE

Le développement de systèmes de traitement de l'eau durables atteignant des taux élevés d'élimination des micropolluants est un défi important pour l'ingénierie environnementale. Le charbon actif (CA) est actuellement largement utilisé dans les usines de traitement de l'eau, car il s'est avéré être un adsorbant efficace pour l'élimination des composés organiques de l'eau. Ceci est dû à sa grande surface spécifique, à sa microporosité interne ainsi qu'à la présence de grandes quantités de divers groupes fonctionnels de surface. Ce matériau est aussi très utilisé en traitement de l'air.

Cependant, le charbon actif permet seulement de séparer les polluants par adsorption des polluants à sa surface, mais il ne permet pas de les dégrader.

Le charbon actif est chargé/saturé en polluants organiques et devient un déchet, qui doit être traité. Dans l'idéal, le traitement doit conduire à la fois à la régénération/réutilisation du charbon actif en grains (afin d'améliorer la durabilité et la rentabilité du procédé), et à la dégradation des polluants organiques (afin d'éviter toute contamination de l'environnement).

Alors que l'efficacité et les mécanismes d'adsorption d'une large gamme de composés organiques sur divers matériaux de charbon actif (grains, poudres, fibres) ont déjà été largement rapportés dans la littérature, il est toujours nécessaire de développer des procédés innovants et efficaces pour la régénération du charbon actif usé/saturé/chargé en polluants.

La régénération thermique est le procédé le plus largement utilisé. L'efficacité dépend étroitement de la nature des composés adsorbés et de la nature des interactions avec la surface du charbon actif. La régénération thermique avec une atmosphère inerte conduit souvent à une faible récupération de la capacité d'adsorption, en raison de l'élimination insuffisante des composés chimisorbés. De plus, un traitement supplémentaire est normalement nécessaire pour la dégradation des polluants désorbés. Des taux d'élimination plus élevés sont atteints pendant le traitement thermique dans des conditions oxydantes, mais la structure microporeuse du charbon actif est alors fortement affectée. De plus, les procédés thermiques sont coûteux. Ils nécessitent la mise en place d'unités centralisées de régénération, impliquant ainsi un transport du charbon actif depuis les unités de dépollution vers les unités de régénération du matériau.

Par ailleurs, les procédés d'électro-oxydation (oxydation anodique, électro-Fenton) permettent de leur côté de dégrader complètement les polluants organiques, jusqu'à la minéralisation complète. Mais leur inconvénient réside dans leur faible efficacité énergétique lorsqu'ils sont utilisés pour le traitement des effluents faiblement concentrés, tels que c'est le cas au niveau des stations de traitement des eaux usées et des usines d'eau potable.

La régénération chimique par oxydation, en utilisant par exemple l'ozone ou la réaction de Fenton, peut également affecter fortement les caractéristiques chimiques et texturales du charbon actif. De plus, une faible efficacité de régénération est souvent observée pour les charbons actifs microporeux, et la régénération chimique est ainsi souvent appliquée uniquement aux matériaux mésoporeux ou non poreux.

Parmi les formes diverses du charbon actif, les fibres poreuses présentent des caractéristiques uniques par rapport au charbon actif granulaire ou en poudre. La forme en fibres fines et la porosité ouverte associée réduit la résistance à la diffusion intra-particulaire et confère à ce matériau des caractéristiques mécaniques et géométriques adaptées à la conception des réacteurs électrochimiques.

Le charbon actif est un matériau efficace pour l'adsorption de composés organiques et il peut être polarisé en tant que cathode, notamment pour la génération électrochimique de H₂O₂ pendant le traitement de l'eau. Par rapport aux lits de grains de charbon actif, les fibres poreuses de charbon actif permettent d'assurer un meilleur niveau d'interconnexion au niveau de la microstructure, et ainsi de réduire les chutes ohmiques ainsi que les zones mortes (zones non-électro-actives) lors de leur utilisation en tant qu'électrode. Leur porosité ouverte permet aussi d'améliorer les cinétiques d'adsorption. Il est ainsi possible de mettre en place des lits de charbon actif présentant une épaisseur plus faible et/ou d'utiliser une vitesse de filtration plus élevée.

Le procédé de régénération est un procédé d'électrolyse, plus précisément d'électro-oxydation, pour lequel des applications en réacteur discontinu (batch) sont majoritairement connues. La possibilité de faire passer la solution à traiter au travers des matériaux anodique et cathodique en mode filtration frontale, au cours du procédé d'électro-oxydation, n'est pas décrite dans la littérature. En ce qui concerne les études de régénération électrochimique, peu d'études portent sur l'utilisation de fibres de charbon actif. Plusieurs études n'utilisent pas non plus le charbon actif comme électrode. Le charbon actif est alors souvent seulement placé dans la solution électrolytique. De plus, beaucoup d'études sur la régénération électrochimique ne mettent en place que des configurations n'impliquant pas de dégradation et de minéralisation des composés organiques qui étaient adsorbés par le filtre (seulement le phénomène de désorption est mis en place). Comme déjà indiqué précédemment, les études ne décrivent pas non plus des systèmes permettant à la solution électrolytique de passer successivement au travers du filtre (utilisé en tant que cathode) et de la contre-électrode (l'anode), lors de la régénération électrochimique. Les publications plus spécifiques relatives à la régénération par électro-oxydation de fibres de charbon actif ne rapportent que des résultats en réacteur discontinu (« batch »).

Par exemple, le document de J.A. Bañuelos, F.J. Rodríguez et al. [Novel electro-Fenton approach for régénération of activated carbon, Environmental Science & Technology. 47 (2013) 7927-7933] présente une méthode basée sur l'électro-Fenton, et utilisée pour favoriser la régénération du charbon actif en grains (CAG) préalablement adsorbé avec du toluène. Le document présente des expériences de régénération électrochimique réalisées à l'aide d'un dispositif en fonctionnement discontinu (dit « batch »), pour l'adsorption et la régénération électro-Fenton. Une cellule électrochimique de laboratoire standard à trois électrodes est utilisée, avec des électrodes en pâte de carbone (cathode) et en platine (anode).

Pour pallier les inconvénients de l'état de l'art, il a été développé un procédé de régénération de charbon actif permettant d'éliminer les polluants accumulés sur le charbon actif saturé, par un procédé d'électrolyse souvent appelé électro-oxydation ou oxydation anodique, en utilisant les fibres de charbon actif saturés en tant que cathode, et une anode en diamant dopé au bore ou en oxydes de titane sous-stoechiométriques, décrit pour un dispositif discontinu « batch », dans la demande de brevet WO 2019/175038 A1. Le dispositif permet de réaliser l'étape d'adsorption et de régénération/élimination des polluants dans le même réacteur. Le dispositif permet à la solution électrolytique de pouvoir passer successivement au travers du filtre utilisé en tant que cathode ainsi qu'au travers du matériau anodique, lors de l'étape de régénération électrochimique.

D'autres exemples se trouvent dans US 2012/234763 A1, EP 0 141 780 A1, US 6 391 185 B1 et US 2012/241383 A1.

### EXPOSE DE L'INVENTION

Le défi majeur dans ce domaine est d'outrepasser les réacteurs batch, et de passer à un procédé pouvant être mis en place de manière continue dans un réacteur au sein duquel pourra se produire à la fois la filtration et, de manière ponctuelle, la régénération par électro-oxydation du filtre utilisé et l'élimination des polluants désorbés. Les défis à relever concernent notamment la mise en place du procédé de régénération à l'intérieur d'un réacteur qui doit être fermé et au sein duquel un écoulement est nécessaire au travers du filtre et des matériaux d'électrode utilisés pour la régénération / élimination des polluants.

Un but de l'invention est de proposer un réacteur permettant de réaliser à la fois l'étape d'adsorption (filtration en continu) et l'étape de régénération et d'élimination des polluants désorbés, in situ, en réduisant au minimum l'intervention d'un opérateur et en éliminant le transport du filtre hors du réacteur pour le régénérer. Un tel réacteur a pour objectif de permettre non seulement une séparation des polluants lors de l'étape d'adsorption, mais aussi une élimination (dégradation et minéralisation) des polluants organiques lors de l'étape de régénération.

L'invention présente un réacteur selon la revendication 1.

Dans divers aspects, il est possible de prévoir l'une ou la totalité des caractéristiques suivantes, prises seules ou en combinaison.

Avantageusement, l'anode présente un matériau percé ou une grille sur laquelle est déposé le matériau d'anode.

Avantageusement, lorsqu'une électrode placée en aval d'une autre par rapport au sens d'écoulement du fluide au cours de la régénération est :
- l'anode, comportant alors un matériau percé ou une grille avec ouvertures/mailles supérieures à 0,15 cm² permettant le passage des bulles de gaz formées au cours de l'électrolyse ; ou
- le filtre utilisé en tant que cathode, alors les moyens d'entrainement du fluide sont configurés pour permettre d'exercer une pression sur cette électrode aval, de façon à réaliser le passage des bulles de gaz formées au cours de l'électrolyse, au travers de cette électrode aval.

Avantageusement, le réacteur présente un matériau d'anode en diamant dopé au bore ou en oxyde de titane sous-stoechiométrique permettant l'élimination des composés organiques.

Avantageusement, la au moins une couche de charbon actif est formée de fibres de charbon actif.

Avantageusement, la au moins une couche de charbon actif est formée de grains de charbon actif.

Avantageusement, la chambre comprend plusieurs couples d'anode / filtre, montés en série, les deux faces d'une électrode pouvant être polarisées lors de l'électrolyse.

Avantageusement, au moins une anode, au moins une cathode et des moyens d'alimentation en courant électrique sont comprises dans le volume tampon ouvert, afin de favoriser l'élimination des polluants au cours de l'électrolyse, telle qu'une anode comprenant au moins une couche de diamant dopé au bore ou en oxyde de titane sous-stoechiométrique.

Avantageusement, le pH de la solution électrolytique est ajusté à un pH supérieur à 9, afin de favoriser la désorption des polluants au cours de l'électrolyse.

Selon l'invention, le réacteur comprend une unité de régulation reliée à des électrovannes des circuits de circulation et de recirculation, aux moyens d'entrainement du fluide et aux moyens d'alimentation en courant électrique, de façon à pouvoir mettre en place le mode de fonctionnement filtration ou électrolyse, par action de l'unité de régulation sur les circuits de circulation et de recirculation ainsi que sur les moyens d'entrainement du fluide et sur les moyens d'alimentation en courant électrique.

Avantageusement, les moyens d'entrainement du fluide sont configurés pour permettre au circuit de recirculation d'atteindre une vitesse de filtration du fluide au travers du filtre supérieure à 2 m/h.

Avantageusement, l'unité de régulation est apte à inverser le sens de la circulation de l'écoulement dans le réacteur entre le passage du fluide dans le réacteur en mode filtration, et le passage de la solution électrolytique en mode électrolyse.

Avantageusement, l'unité de régulation est reliée à un capteur de mesure de la concentration en polluants au niveau de la sortie, le mode électrolyse étant mis en place lorsque la concentration en polluants passe au-dessus d'une valeur donnée, le mode filtration étant mis en place lorsque la concentration en polluants passe en-dessous d'une valeur donnée.

Avantageusement, le fluide est un gaz ou un liquide tel qu'un liquide aqueux.

L'invention présente aussi un système comprenant plusieurs réacteurs décrit précédemment.

Dans divers aspects, il est possible de prévoir l'une ou la totalité des caractéristiques suivantes, prises seules ou en combinaison.

Avantageusement, les circuits de recirculation du fluide des réacteurs sont reliés de façon à présenter un volume tampon ouvert commun.

Avantageusement, les réacteurs sont placés en série ou en parallèle par rapport à l'écoulement du fluide à traiter.

### DESCRIPTION DES FIGURES

D'autres objectifs, caractéristiques et avantages sortiront de la description détaillée qui suit, en référence aux dessins donnés à titre illustratif et non limitatif parmi lesquels :
- la figure 1a représente un schéma d'une coupe transversale d'un réacteur utilisé en mode adsorption ;
- la figure 1b représente un schéma d'une coupe transversale d'un réacteur utilisé en mode régénération ;
- la figure 2 représente un montage expérimental du réacteur, vu du dessus ;
- la figure 3 représente un montage expérimental du réacteur, vu de côté ;
- la figure 4 représente le réacteur en pièces détachées, vu du dessus ;
- la figure 5 représente un schéma d'un système comprenant plusieurs réacteurs en parallèle, fonctionnant soit en adsorption, soit en régénération, de telle sorte que l'écoulement de l'eau soit continu ;
- la figure 6 représente un schéma d'un système comprenant plusieurs réacteurs en série, fonctionnant soit en adsorption, soit en régénération, de telle sorte que l'écoulement de l'eau soit continu et contrôlé par une unité de régulation au moyen de capteurs ;
- la figure 7 représente le taux d'adsorption d'un filtre vierge et de filtres non régénérés, en fonction du temps ;
- la figure 8 représente le taux d'adsorption d'un filtre vierge et de filtres régénérés, en fonction du temps ;
- la figure 9 représente un schéma de la désorption des polluants organiques et de leur dégradation ;
- la figure 10 représente des images effectuées au microscope électronique à balayage du tissu de charbon actif initial (A, E) et après 10 cycles de régénération (B, F). Les images C et D se concentrent sur la zone de rupture des fibres poreuses observées dans le matériau après 10 cycles de régénération ;
- la figure 11 représente une courbe de percée du filtre de fibres de charbon actif pour l'élimination de 50 mg/L d'acide clofibrique par une couche de fibres (résultats présentés par un triangle), 100 mg/L de phénol par 8 couches de fibres (résultats présentés par un rond), 100 mg/L de phénol par 10 couches de fibres (résultats présentés par un carré). Le ratio C / C₀ représente le ratio entre la concentration à la sortie du filtre (C) et la concentration initiale de la solution (C₀) ;
- la figure 12 représente l'évolution de la concentration en carbone organique total (COT) dans la solution, au cours des cycles de régénération entre chaque cycle d'adsorption ;
- la figure 13 représente l'évolution du taux d'adsorption de phénol (polluant modèle) sur les fibres de charbon actif (en g de phénol par g de fibres de charbon actif), en fonction du temps de filtration au cours de deux cycles d'adsorption de 290 min (test d'adsorption accéléré). Une étape de régénération électrochimique est réalisée in situ entre les 2 cycles ;
- la figure 14 représente l'évolution de la concentration en carbone organique total (COT) dans la solution, au cours du cycle de régénération ;
- la figure 15 représente un schéma explicatif de la problématique de rétention de gaz entre les électrodes au cours de l'électrolyse ;
- la figure 16 représente l'évolution de la différence de potentiel (DDP) de la cellule, dans une configuration lit de fibres charbon actif (cathode) / grille BDD serrée (anode). Le flux de la solution électrolytique au travers des électrodes est de 1000 L.m⁻².h⁻² (i.e. vitesse de filtration de 1 m.h⁻¹) ;
- la figure 17 représente l'évolution de la différence de potentiel (DDP) de la cellule, dans une configuration lit de fibres charbon actif (cathode) / grille BDD serrée (anode). Le flux de la solution électrolytique au travers des électrodes est de 5000 L.m⁻².h⁻² (i.e. vitesse de filtration de 5 m.h⁻¹) ;
- la figure 18 représente l'évolution de la différence de potentiel (DDP) de la cellule, dans une configuration lit de fibres charbon actif (cathode) / grille BDD serrée ou large (anode). Le flux de la solution électrolytique au travers des électrodes est de 1000 L.m⁻².h⁻² (i.e. vitesse de filtration de 1 m.h⁻¹) ;
- la figure 19 représente l'évolution de la différence de potentiel (DDP) de la cellule, dans une configuration grille BDD serrée (anode) / lit de fibres charbon actif (cathode). Le flux de la solution électrolytique au travers des électrodes est de 1000 L.m⁻².h⁻² (i.e. vitesse de filtration de 1 m.h⁻¹) ou de 5000 L.m⁻².h⁻² (i.e. vitesse de filtration de 5 m.h⁻¹) ;

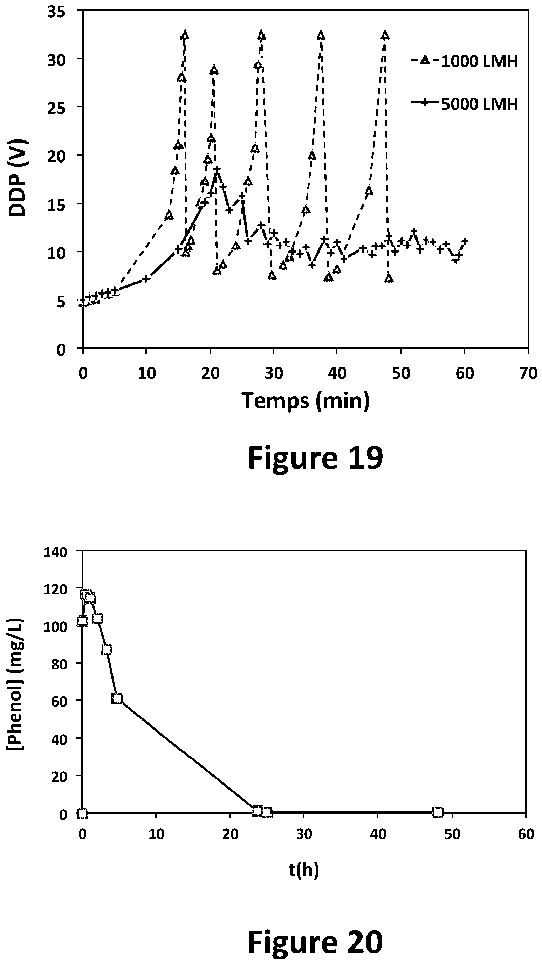

- la figure 20 représente l'évolution de la concentration en phénol lors de la régénération d'un filtre de 10 fibres de charbon actif (surface de 19,6 cm²) saturé par filtration d'une solution de 10 mg/L de phénol à 2 L/h. Une anode de type grille de BDD (taille de maille large) est placée en aval du filtre, une autre en amont. Une anode en BDD et une cathode en acier inoxydable sont placées dans le volume tampon pour la recirculation. L'intensité du courant est de 300 mA dans le volume tampon, et de 300 mA dans la chambre. La vitesse de filtration de la solution électrolytique est de 5 m/h. La solution électrolytique contient 50 mM de Na₂SO₄ et le pH est ajusté à 13 avec NaOH ;

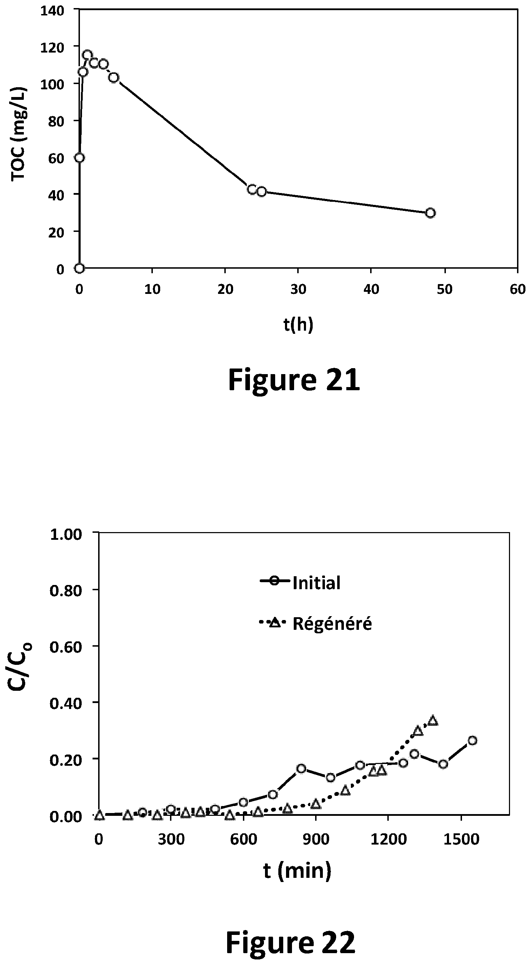

- la figure 21 représente l'évolution de la concentration en carbone organique total (TOC) lors de la régénération d'un filtre de 10 fibres de charbon actif (surface de 19,6 cm²) saturé, par filtration d'une solution de 10 mg/L de phénol à 2 L/h. Une anode de type grille de BDD (taille de maille large) est placée en aval du filtre, une autre en amont. Une anode en BDD et une cathode en acier inoxydable sont placées dans le volume tampon pour la recirculation. L'intensité du courant est de 300 mA dans le volume tampon, et de 300 mA dans la chambre. La vitesse de filtration de la solution électrolytique est de 5 m/h. La solution électrolytique contient 50 mM de Na₂SO₄ et le pH est ajusté à 13 avec NaOH ;
- la figure 22 représente l'évolution de la courbe de percée de l'adsorption de 10 mg/L de phénol à un débit de 2 L/h sur un filtre de 10 fibres de charbon actif (surface de 19,6 cm²), sur le filtre neuf et après régénération. Les conditions opératoires de la régénération sont celles indiquées pour les figures 20 et 21.

### DESCRIPTION DETAILLEE DE L'INVENTION

L'invention présente une première réalisation, un réacteur 1 permettant la filtration frontale en continu d'un fluide en écoulement pour l'adsorption de polluants sur un filtre 2, et une électrolyse pour la régénération du filtre 2 et l'élimination des polluants organiques,
le réacteur 1 comportant :
- une chambre 3, avec au moins une entrée 4 délivrant un fluide dans la chambre 3 et au moins une sortie 5 permettant d'évacuer le fluide de la chambre 3 ;
- des moyens d'alimentation en courant électrique ;
- un circuit de circulation 8 d'un fluide à traiter par adsorption des polluants sur le filtre 2, permettant le passage du fluide à traiter au travers de la chambre 3 ;
- un circuit de recirculation 9 d'une solution électrolytique pour l'électrolyse, reliant la sortie 5 à l'entrée 4, et passant par un volume tampon ouvert 9a permettant l'évacuation des bulles de gaz générées au cours de l'électrolyse ;
- des moyens d'entrainement du fluide ;

la totalité du fluide à traiter et de la solution électrolytique passant successivement au travers de l'ensemble des éléments de la chambre 3 qui comporte au moins :
   - un filtre 2 poreux, présentant au moins une couche de charbon actif permettant l'adsorption des polluants organiques lors de l'écoulement du fluide à traiter,
la/les couches étant reliée(s) électriquement aux moyens d'alimentation en courant électrique, afin de polariser la/les couche(s) uniquement lors de l'électrolyse, le filtre 2 étant la cathode au cours de l'électrolyse et du passage de la solution électrolytique permettant la régénération du filtre et l'élimination des polluants organiques ;
   - une anode 6, en amont ou en aval du filtre 2, comprenant au moins une couche de matériau d'anode et des ouvertures permettant l'écoulement du fluide lors de la filtration et de la solution électrolytique lors de l'électrolyse,
le matériau étant relié électriquement aux moyens d'alimentation du courant électrique, afin de le polariser en tant qu'anode au cours de l'électrolyse pour l'élimination des polluants organiques désorbés du filtre 2,
l'anode 6 et le filtre 2 sont placés horizontalement au sein de la chambre 3 placée verticalement, le circuit de recirculation 9 assurant un écoulement ascensionnel de la solution électrolytique au sein de la chambre 3, afin de favoriser l'évacuation des bulles de gaz formées au cours de l'électrolyse ;
le réacteur 1 fonctionnant suivant deux modes :
   - en mode filtration continue d'un fluide par le circuit de circulation 8 pour l'adsorption des polluants sur le filtre 2, sans alimentation électrique, sans recirculation de l'eau,
   - en mode électrolyse, pour la régénération du filtre 2 et l'élimination des polluants organiques, par application d'un courant électrique entre le filtre 2 utilisé en tant que cathode et l'anode 6, avec recirculation continue de la solution électrolytique par le circuit de recirculation 9.

L'invention présente une deuxième réalisation, un réacteur 1 permettant la filtration en continu d'un fluide en écoulement pour l'adsorption de polluants sur un filtre 2, et la mise en place d'une électrolyse pour la régénération du filtre 2 et l'élimination des polluants organiques,
le réacteur 1 comportant :
   - une chambre 3, avec au moins une entrée 4 délivrant un fluide dans la chambre 3 et au moins une sortie 5 permettant d'évacuer le fluide de la chambre 3 ;
   - des moyens d'alimentation en courant électrique d'au moins une anode 6 et au moins un filtre 2 utilisé en tant que cathode ;
   - un circuit de circulation 8 d'un fluide à traiter par adsorption des polluants sur le filtre 2, permettant le passage du fluide à traiter au travers de la chambre 3 ;
   - un circuit de recirculation 9 d'une solution électrolytique pour l'électrolyse, reliant la sortie 5 à l'entrée 4, et passant par un volume tampon ouvert 9a permettant l'évacuation des bulles générées au cours du procédé d'électrolyse,
au sein duquel la totalité du fluide à traiter et/ou de la solution électrolytique passent successivement au travers de l'ensemble des éléments de la chambre 3 qui comporte au moins :
   - un filtre 2 comprenant au moins une couche de charbon actif, permettant l'écoulement d'un fluide liquide au travers, l'adsorption des polluants, le passage des bulles de gaz formées au cours de l'électrolyse, la/les couches étant reliée(s) électriquement aux moyens d'alimentation en courant électrique, afin de polariser la/les couche(s), le filtre 2 étant la cathode au cours de l'électrolyse permettant la régénération du filtre et l'élimination des polluants organiques.
   - une anode 6 permettant l'écoulement d'un fluide liquide au travers, le passage des bulles de gaz formées au cours de l'électrolyse si elle est placée au-dessus du filtre 2, comprenant au moins une couche de matériau d'anode permettant de réaliser l'électrolyse de l'eau, le matériau étant relié électriquement aux moyens d'alimentation du courant électrique, afin de la polariser en tant qu'anode au cours de l'électrolyse pour l'élimination des polluants organiques désorbés du filtre 2,
   - un élément séparateur 11, situé entre l'anode 6 et le filtre 2, permettant que le filtre 2 utilisé en tant que cathode et l'anode 6 soient reliées électriquement uniquement par la solution électrolytique au cours de l'électrolyse,
la chambre 3 fonctionnant suivant deux modes :
   - en mode filtration continue d'un fluide par le circuit de circulation 8 pour l'adsorption des polluants sur le filtre 2, sans alimentation électrique, sans recirculation du fluide, l'anode 6 ne jouant alors aucun rôle,
   - en mode électrolyse, pour la régénération du filtre 2 et l'élimination des polluants organiques, par application d'un courant électrique entre le filtre 2 utilisé en tant que cathode et l'anode 6, avec recirculation continue de la solution électrolytique par le circuit de recirculation 9.

L'invention présente une troisième réalisation, un réacteur 1 permettant la filtration en continu d'une eau en écoulement par adsorption de polluants organiques sur un filtre 2, et la régénération in-situ du filtre 2,
comportant :
- une chambre 3 de filtration et de régénération, avec au moins une entrée 4 délivrant l'eau à traiter contenant des polluants organiques ou une solution électrolytique dans la chambre 3 de filtration et de régénération, et au moins une sortie 5 permettant d'évacuer l'eau filtrée de la chambre 3 de filtration et de régénération,
- des moyens d'alimentation en courant électrique d'au moins une anode 6 et au moins une cathode 7.

Le réacteur 1 comporte également un circuit de circulation 8 de l'eau pour la filtration de l'eau à traiter, et un circuit de recirculation 9 d'une solution électrolytique pour la régénération du filtre, relié à un volume tampon ouvert 9a, utilisé pour l'évacuation des bulles générées lors de la régénération, reliant la sortie 5 à l'entrée 4.

La chambre 3 de filtration et de régénération comporte :
- un filtre 2 comprenant au moins une couche de fibres poreuses de charbon actif permettant la filtration de l'eau et l'adsorption des polluants organiques à leur surface,
   et reliée(s) électriquement aux moyens d'alimentation en courant électrique, afin de polariser la/les couche(s), le filtre 2 étant la cathode 7 pour la régénération,
- l'anode 6 comprenant au moins une couche de matériau d'anode non-active pour réaliser une oxydation anodique des polluants organiques, un matériau d'anode non-actif étant défini comme ayant une surtension au dégagement d'oxygène supérieure à 0.4 V par rapport au potentiel thermodynamique d'évolution de l'oxygène,
   le matériau étant relié électriquement aux moyens d'alimentation du courant électrique, afin de le polariser en tant qu'anode 6, pour la régénération,
   le matériau d'anode non-active étant configuré pour permettre l'écoulement de l'eau au travers,
- au moins un élément séparateur 11 situé entre l'anode 6 et la cathode 7, permettant que la cathode 7 et l'anode 6 soient reliées électriquement uniquement par la solution électrolytique

La chambre 3 de filtration et de régénération fonctionnant suivant deux modes :
> en mode filtration continue de l'eau à traiter pour l'adsorption des polluants organiques de l'eau, sans courant électrique, sans recirculation de l'eau,
> en mode régénération, par application d'un courant électrique entre la cathode 7 et l'anode 6, avec recirculation continue de la solution électrolytique,
pour désorber les polluants organiques de la surface de la couche de fibres de charbon actifs, et les éliminer par des espèces oxydantes générées électrochimiquement, qui minéralisent les polluants organiques, pour régénérer la couche de fibres de charbon actif.

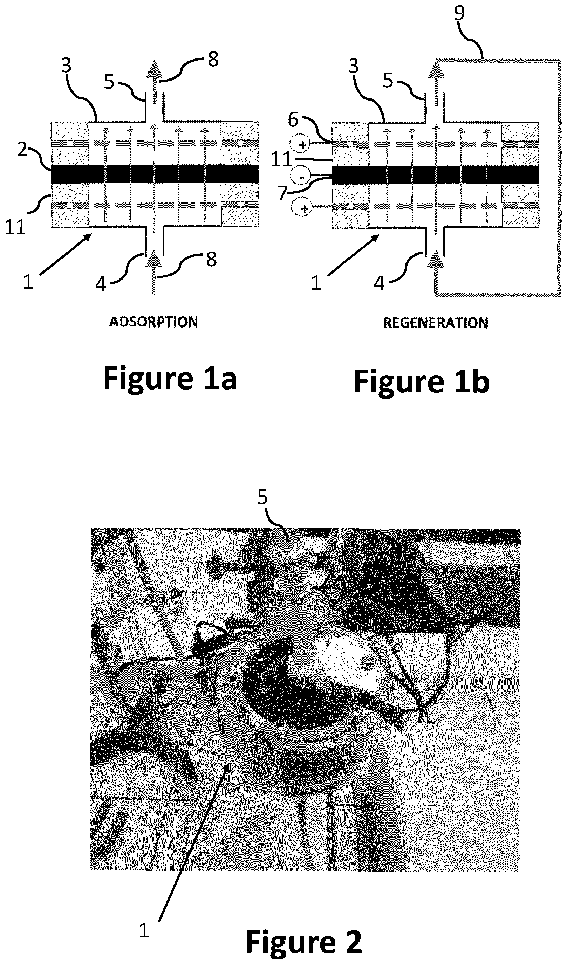

L'invention montre pour la première fois un réacteur 1 continu capable de réaliser à la fois :
- une adsorption efficace en continu de polluants contenus dans l'eau grâce à l'utilisation d'un lit fixe de fibres de charbon actif,
- la régénération in situ dans le même réacteur de ces fibres de manière ponctuelle,
- l'élimination (dégradation / minéralisation) des polluants organiques accumulés à la surface des fibres de charbon actif, lors des étapes de régénération,
comme le démontre les figures 1, 7, 8, 11, 13 et 14.

### Le réacteur 1

Avantageusement, le fluide est un gaz ou un liquide tel qu'un liquide aqueux.

Plus avantageusement, le fluide est un liquide aqueux.

Le réacteur 1 peut posséder une seule anode 6 en aval de la cathode 7 ou posséder deux anodes 6 : une première anode 6 se situant en amont de la cathode 7 et une seconde anode 6 se situant en aval de la cathode 7.

Le réacteur 1 présente des parois d'extrémité de l'écoulement, avantageusement suffisamment éloignées de l'anode 6 et de la cathode 7, et/ou profilées en troncône (en tronc de cône, en entonnoir) : dans le but d'améliorer l'hydrodynamique et de favoriser l'évacuation des gaz et pouvant ainsi limiter la présence de bulles dans le réacteur.

Les parois d'extrémité peuvent présenter un canal d'évacuation des gaz générés lors de l'oxydation anodique.

Un réacteur présentant des parois d'extrémité de l'écoulement suffisamment éloignées de l'anode et de la cathode, et/ou profilées en troncône (tronc de cône) : pour favoriser l'hydrodynamique et l'évacuation des gaz.

Avantageusement, le réacteur 1 présente un matériau d'anode 6, un circuit de recirculation 9 et une hydrodynamique permettant d'éviter la rétention des bulles de gaz générées au cours de l'électrolyse.

Avantageusement, le réacteur 1 comprend :
- le filtre 2 présentant des grains de charbon actif et/ou des fibres de charbon actif ;
- l'anode 6 présentant un matériau percé ou une grille sur laquelle est déposé le matériau d'anode.

Avantageusement, le réacteur 1 présentant un matériau d'anode 6, un filtre 2 en fibres de charbon actif et une composition de la solution électrolytique permettant d'améliorer la désorption des polluants et leur élimination au cours de l'électrolyse.

Avantageusement, lorsqu'une électrode placée en aval d'une autre par rapport au sens d'écoulement du fluide au cours de la régénération est :
- l'anode 6, comportant alors un matériau percé ou une grille avec ouvertures/mailles supérieures à 0,15 cm² permettant le passage des bulles de gaz formées au cours de l'électrolyse ; ou
- le filtre 2 utilisé en tant que cathode, alors les moyens d'entrainement du fluide sont configurés pour permettre d'exercer une pression sur cette électrode aval, de façon à réaliser le passage des bulles de gaz formées au cours de l'électrolyse, au travers de cette électrode aval.

Avantageusement, la grille a des ouvertures/mailles supérieures à 0,20 cm² ; 0,25 cm² ; 0,30 cm² ; 0,35 cm² ; 0,40 cm² ; 0,45 cm² ; ou 0,50 cm².

Dans une autre incarnation, le réacteur 1 est un réacteur 1 colonne qui peut présenter des éléments séparateurs 11 entre l'anode 6 et la cathode 7, et dont l'écoulement présente un flux ascendant. Ces éléments séparateurs doivent permettre que l'anode et la cathode soient reliées électriquement uniquement par la solution électrolytique. Les moyens d'alimentation en courant électrique ne doivent pas affecter l'étanchéité du réacteur 1 fermé.

Avantageusement, la chambre 3 comprend plusieurs couples d'anode 6 / filtre 2, montés en série, les deux faces d'une électrode pouvant être polarisées lors de l'électrolyse.

Avantageusement, au moins une anode, au moins une cathode et des moyens d'alimentation en courant électrique sont comprises dans le volume tampon ouvert 9a, afin de favoriser l'élimination des polluants au cours de l'électrolyse, telle qu'une anode comprenant au moins une couche de diamant dopé au bore ou en oxyde de titane sous-stoechiométrique.

Avantageusement, des séparateurs en PMMA (polyméthacrylate de méthyle) ou en PTFE (polytétrafluoroéthylène) sont utilisés et des fils et/ou des feuilles de titane et/ou de platine sont utilisés pour l'alimentation électrique.

Avantageusement, des joints sont utilisés pour que l'ensemble des éléments présents dans le réacteur 1 permettent l'écoulement au travers des matériaux d'anode et de cathode, sans zone de court-circuit (exemple : effets de bords).

La couche anodique du réacteur 1 est avantageusement déposée sur un support avec des ouvertures, dont les ouvertures possèdent une dimension permettant l'écoulement de l'eau et l'évacuation des bulles de gaz générées au cours de l'électrolyse.

La couche d'anode non-active est un matériau pouvant permettre l'écoulement de l'eau et l'évacuation des bulles de gaz générées au cours de l'électrolyse.

Avantageusement, la couche d'anode non-active et/ou le support sont poreux, l'anode 6 peut soit être un matériau non-actif à 100% soit être un dépôt sur un support.

Dans une incarnation possible, la couche d'anode non-active et/ou le support présente un quadrillage tel qu'une grille, et/ou est percé.

Dans une réalisation possible, le réacteur 1 possède une armature 12 pouvant contenir toutes les couches, le réacteur 1 pouvant se démonter, les couches à l'intérieur peuvent être changées pour remplacer les couches.

Avantageusement, les grilles sont choisies au lieu des anodes percées afin d'améliorer l'hydrodynamique au sein de la cellule.

Avantageusement, la couche d'anode non active et/ou le support présente un espacement entre ses ouvertures configuré pour limiter la présence de bulles entre l'anode 6 et la cathode 7, et permettre notamment l'évacuation des gaz (H2, O2) formés lors de l'oxydation anodique.

Par exemple, la surface du support (d'une grille) est de 20cm².

Avantageusement, la surface des trous est comprise entre 20 et 100 mm², plus précisément entre 30 et 60 mm².

Avantageusement, le support comporte entre 60 et 100 trous, plus précisément entre 70 et 90.

Dans une incarnation possible, la couche d'anode est un matériau poreux, pouvant être une mousse de TiOx ou une membrane en TiOx. La mousse pouvant avoir des pores avec une taille comprise entre 60 et 300 µm. La membrane pouvant avoir des pores avec une taille comprise entre 0,1 et 5 µm.

Avantageusement, lorsque la couche d'anode est une mousse de TiOx ou une membrane en TiOx électrode placée en aval d'une autre électrode par rapport au sens d'écoulement du fluide au cours de la régénération, alors les moyens d'entrainement du fluide sont configurés pour permettre d'exercer une pression sur cette électrode aval de façon à réaliser le passage des bulles de gaz formées au cours de l'électrolyse, au travers de cette électrode aval.

Dans un montage possible, le réacteur 1 présente dans un corps 12, montés en série :
- un élément d'entrée de l'eau,
- une première couche d'anode non active en appui sur un premier support,
- un premier élément séparateur 11 non conducteur, avec joint d'étanchéité en contact au moins sur une cathode 7,
- la cathode présentant plusieurs couches de fibres poreuses de charbon actif,
- un deuxième élément séparateur 11 non conducteur, avec joint d'étanchéité en contact au moins sur la cathode 7,
- une deuxième couche d'anode non active reposant sur un deuxième support,
- un élément de sortie de l'eau.

Selon l'invention, le réacteur comprend une unité de régulation 14 reliée à des électrovannes des circuits de circulation 8 et de recirculation 9, aux moyens d'entrainement du fluide et aux moyens d'alimentation en courant électrique, de façon à pouvoir mettre en place le mode de fonctionnement filtration ou électrolyse, par action de l'unité de régulation 14 sur les circuits de circulation 8 et de recirculation 9 ainsi que sur les moyens d'entrainement du fluide et sur les moyens d'alimentation en courant électrique.

Avantageusement, l'unité de régulation est apte à inverser le sens de la circulation de l'écoulement dans le réacteur entre le passage du fluide dans le réacteur en mode filtration, et le passage de la solution électrolytique en mode électrolyse.

Avantageusement, l'unité de régulation est reliée à un capteur de mesure de la concentration en polluants au niveau de la sortie 5, le mode électrolyse étant mis en place lorsque la concentration en polluants passe au-dessus d'une valeur donnée, le mode filtration étant mis en place lorsque la concentration en polluants passe en-dessous d'une valeur donnée.

Avantageusement, les moyens d'entrainement du fluide sont configurés pour permettre au circuit de recirculation 9 d'atteindre une vitesse de filtration du fluide au travers du filtre 2 supérieure à 2 m/h.

Avantageusement, la vitesse de filtration du fluide est supérieure à 3m/h ; 4m/h ; 5m/h ; 6m/h ; 7m/h ; 8m/h ; 9m/h ; ou 10m/h.

Le réacteur 1 possède deux modes d'utilisations, avantageusement son utilisation la plus commune est le mode filtration.

### Mode filtration/ adsorption

Par rapport à une solution technique d'électro-oxydation conventionnelle (traitement en continu d'un effluent), l'invention présente les avantages suivants :
- préconcentration des polluants sur les fibres de charbon actif avant application ponctuelle de l'électro-oxydation ; cette étape permet d'améliorer l'efficacité énergétique du procédé et donc de réduire la consommation énergétique ;
- possibilité de contrôler la composition de la solution électrolytique afin de réduire la production de sous-produits toxiques (exemple : sous-produits chlorés lors de l'utilisation d'une solution conventionnelle d'électro-oxydation d'un effluent contenant des ions chlorures) ;
- possibilité de réduire la consommation d'électrolyte nécessaire au passage du courant, grâce à la mise en place de l'électro-oxydation uniquement de manière ponctuelle

L'utilisation d'un lit de fibres de charbon actif permet d'assurer une filtration efficace de l'eau, tout en maintenant une faible épaisseur du lit de filtration.

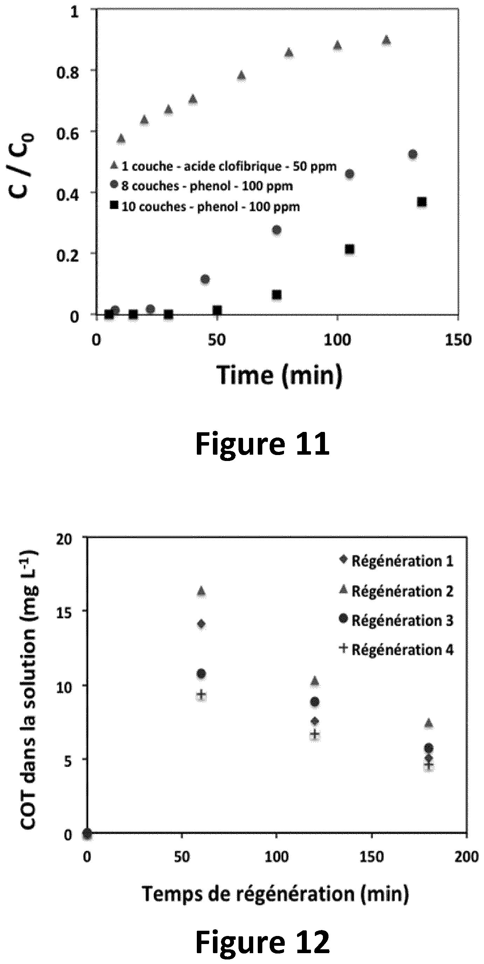

Des exemples de résultats sont présentés dans la Figure 11, notamment l'influence de l'épaisseur du filtre 2 (qui dépend du nombre de couches de fibres de charbon actif). Dans cette étude, l'acide clofibrique et le phénol ont été utilisés comme polluant modèle. Cette étude a été réalisée avec une concentration élevée en polluant, afin de réduire le temps de percée du filtre 2 et de pouvoir réaliser des observations expérimentales à l'échelle de 2-3 jours au maximum. Il y a une élimination complète des polluants avec ces concentrations élevées, dès l'utilisation de seulement 8 couches de fibres, soit une épaisseur du lit de filtration de seulement 4 mm.

### La couche fibreuse / filtre 2

Dans une réalisation possible, la au moins une couche de charbon actif est formée de fibres de charbon actif.

Dans une autre réalisation possible, la au moins une couche de charbon actif est formée de grains de charbon actif.

Par rapport à une solution technique d'adsorption sur charbon actif conventionnelle, l'invention présente les avantages suivants :
- possibilité de bénéficier des caractéristiques des fibres de charbon actif (afin de pallier les limitations du grain et de la poudre) et de mettre en place des réacteurs compacts (faible épaisseur des lits de filtration) ;
- possibilité de réduire la quantité de matériau adsorbant utilisée (grâce à la régénération).

Le réacteur 1 peut présenter plusieurs couches de fibres de charbon actif superposées.

Avantageusement, les fibres poreuses se présentent sous forme de feutre ou de tissu.

Avantageusement, la au moins une couche de charbon actif présente une surface spécifique supérieure à 600 m2.g-1 et les fibres poreuses présentent une porosité de sorte que plus de 30% du volume poreux de chacune des fibres poreuses est constitué par des pores de taille inférieure à 2 nm.

La couche de fibres de charbon actif possède une épaisseur pouvant être comprise entre 0,3 et 20 cm (l'épaisseur de cette couche dépend du nombre de sous couche de fibres de charbons utilisées).

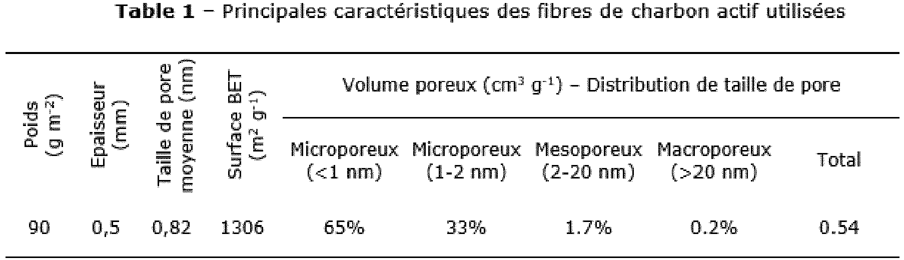

### Entrée 4/sortie 5 d'eau

Avantageusement, la vitesse de filtration (ratio entre le débit d'eau et la surface du filtre 2) est comprise entre 0,2 m/h et 5 m/h, en mode filtration, et entre 2 et 20 m/h en mode régénération.

Dans une incarnation possible, la sortie 5 possède une forme conique (pointe en aval du courant), pour faciliter l'évacuation des gaz.

Dans une incarnation possible, l'entrée 4 possède une forme conique (pointe en amont du courant), pour répartir l'eau sur la surface de la/ des couche(s) de fibres de charbon actifs.

Dans une autre réalisation, le réacteur 1 possède une nouvelle sortie 5 située entre l'anode 6 et la cathode 7, avantageusement utilisée lors de la régénération. Dans cette incarnation, la solution électrolytique s'écoule de l'entrée 4 vers la nouvelle sortie 5, et de l'ancienne sortie 5 (devenant une nouvelle entrée 4) vers la nouvelle sortie 5.

Dans une autre réalisation, un capteur 13 est ajouté, pour permettre de mesurer la quantité de polluants organiques à l'entrée 4 et à la sortie 5, afin d'établir un pourcentage d'efficacité de filtration.

Avantageusement, le réacteur 1 passe en mode régénération quand le pourcentage d'efficacité de filtration atteint de préférence moins de 95%.

Avantageusement, le seuil, permettant un changement automatique de mode d'utilisation, est modulable.

### Mode régénération

Dans ce mode d'utilisation, la circulation d'eau entrante (à filtrer) est coupée, afin d'utiliser une solution électrolytique recirculée en continu. La solution électrolytique provient d'un volume tampon ouvert.

Afin de procéder à la régénération du filtre 2 (couches de charbons actifs), un courant électrique passe dans la au moins une couche de charbon actif et dans la couche de matériau anodique, formant respectivement une cathode 7 et une anode 6.

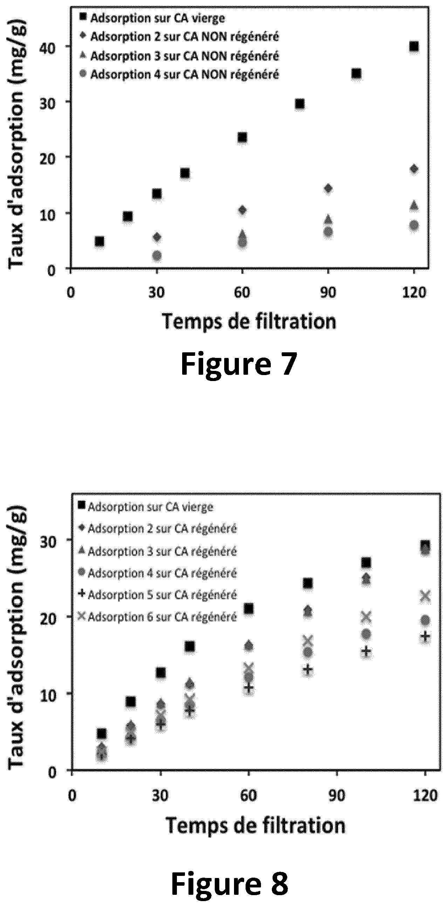

Grâce à ce mode de régénération et à l'invention :
- possibilité de régénérer plusieurs fois de manière in situ les fibres de charbon actif, afin de recouvrer la capacité d'adsorption initiale, comme le démontre la figure 8 ;
- minimisation de la manutention et élimination du transport du matériau adsorbant usagé ;
- possibilité d'éliminer complètement les polluants (minéralisation) ;
- application ponctuelle du procédé d'électro-oxydation (après l'adsorption) ; cela permet de fortement réduire la consommation d'électrolyte (sels pouvant être ajoutés pour augmenter la conductivité de l'eau et réduire la consommation énergétique), par rapport à une application en continu du procédé d'électro-oxydation. La forte concentration en polluant sur les fibres de charbon actif améliore aussi l'efficacité énergétique du procédé d'électro-oxydation, par rapport à une application conventionnelle en continu sur l'eau à traiter moins concentrée. La composition de l'électrolyte peut-être choisie afin de sélectionner les espèces oxydantes qui seront formées, et éviter la formation de composés toxiques.

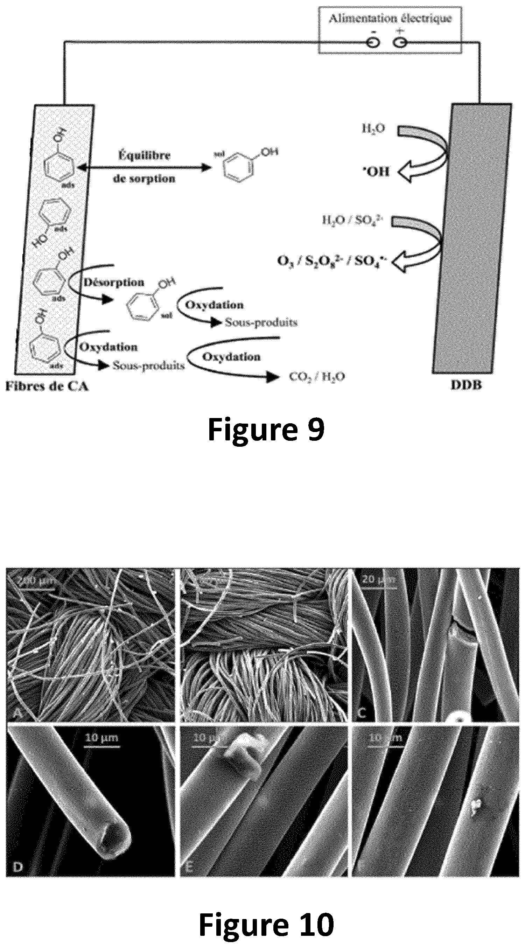

La régénération fonctionne par différents mécanismes :
- désorption des polluants de la cathode 7, cette désorption est accélérée par la polarisation en tant que cathode 7 du matériau et le pH local élevé au niveau de la cathode 7 (interactions électrostatiques) ;
- formation d'espèces oxydantes, principalement à l'anode 6 (principalement radicaux hydroxyles, persulfates, radicaux sulfates), mais aussi à la cathode (peroxyde d'hydrogène, radicaux sulfates), pour la dégradation et la minéralisation des polluants désorbés, comme le démontre la figure 9 ;
- dégradation et minéralisation dans la solution des polluants désorbés permettant un décalage continu de l'équilibre de sorption, et donc la désorption continue des composés adsorbés ;
- oxydation directe des composés adsorbés par les espèces oxydantes formées électrochimiquement.

Pour effectuer la régénération, une solution électrolytique circule dans la chambre 3 de filtration. La solution électrolytique circule dans le circuit de recirculation 9, la solution n'est pas jetée, elle est réutilisée et tourne en boucle dans le circuit de recirculation 9 et dans la chambre 3, jusqu'à que le filtre 2 ne possède plus qu'une quantité limitée de polluants organiques.

Dans une incarnation possible, le circuit de recirculation 9 possède un récipient comprenant un volume tampon ouvert 9a de la solution électrolytique. Lors de la régénération du filtre, le récipient fournit la solution électrolytique du volume tampon 9a qui circule de l'entrée 4 de la chambre de filtration 3, et le récipient reçoit la solution électrolytique par la sortie 5 de la chambre 3 de filtration. Les bulles formées lors de la régénération sont transportées par la solution électrolytique lors de son écoulement dans le circuit de recirculation 9. Les bulles sont évacuées dans le volume tampon 9a, avec un moyen de renouvellement de l'air ou par contact direct avec l'air.

Dans une incarnation possible, le volume tampon 9a possède une anode 6 et une cathode 7, participant à l'élimination par électro-oxydation des composés désorbés (les polluants organiques) lors de la régénération, permettant de réduire le temps de régénération. Différents matériaux d'électrodes peuvent être utilisés, selon la nature des composés désorbés à éliminer.

Dans un exemple d'utilisation, un capteur 13 permet de suivre la minéralisation des polluants désorbés, au cours des cycles de régénération, la figure 12 montre ses résultats. Il est tout d'abord observé une augmentation de la concentration en COT, résultant d'une désorption initiale rapide des polluants. La concentration en COT diminue ensuite, résultant de la minéralisation des polluants dans la solution, grâce aux espèces oxydantes qui sont principalement générées à l'anode 6 (oxydation anodique).

Avantageusement, le capteur 13 mesure l'absorbance UV de l'eau à l'entrée 4 et à la sortie 5.

Dans une autre incarnation possible, le capteur 13 mesure la concentration en Carbone Organique Total (COT) de l'eau.

### La solution électrolytique

Avantageusement, la solution électrolytique est une solution de sulfate de sodium à 50 mM. Cette solution permet d'éviter la formation de sous-produits toxiques, tel que c'est le cas en présence de chlorures.

Avantageusement, la solution électrolytique contient uniquement du sulfate de sodium.

Plus avantageusement, la solution électrolytique est sans fer et/ou sans oxygène.

Avantageusement, le pH de la solution électrolytique est ajusté, pour améliorer la désorption des polluants.

Avantageusement, le pH de la solution électrolytique est ajusté, pour améliorer la désorption des polluants à un pH supérieur à 8 ; 9 ; 10 ; 11 ; 12 ; 13.

Avantageusement, des ions peroxymonosulfate et/ou peroxodisulfate sont produits à l'anode, par oxydation des ions sulfates, pour favoriser la régénération du filtre et/ou l'élimination des polluants organiques.

Avantageusement, des ions peroxymonosulfate et/ou peroxodisulfate sont activés au niveau du filtre en charbon actif utilisé en tant que cathode, pour former des espèces oxydantes permettant de favoriser la régénération du filtre et/ou l'élimination des polluants organiques.

Avantageusement, des ions peroxymonosulfate et/ou peroxodisulfate sont ajoutés dans la solution électrolytique, pour favoriser la régénération du filtre et/ou l'élimination des polluants organiques.

Dans une autre incarnation, la solution électrolytique contient source de fer et de l'air barboté afin de promouvoir, en plus de l'oxydation anodique, le procédé électro-Fenton (formation d'H₂O₂ et de Fe²⁺ à la cathode permettant la formation de radicaux hydroxyles par la réaction de Fenton).

### Exemples / utilisations du réacteur 1

L'invention possède des avantages, notamment une grande efficacité du procédé attribuée à
(i) l'oxydation directe du phénol (PH) adsorbé par les radicaux hydroxyles générés,
(ii) le déplacement continu de l'équilibre d'adsorption dû à l'oxydation des composés organiques dans la solution et à la réaction à l'anode et
(iii) l'augmentation locale du pH au niveau de la cathode 7 conduisant à des interactions électrostatiques répulsives.

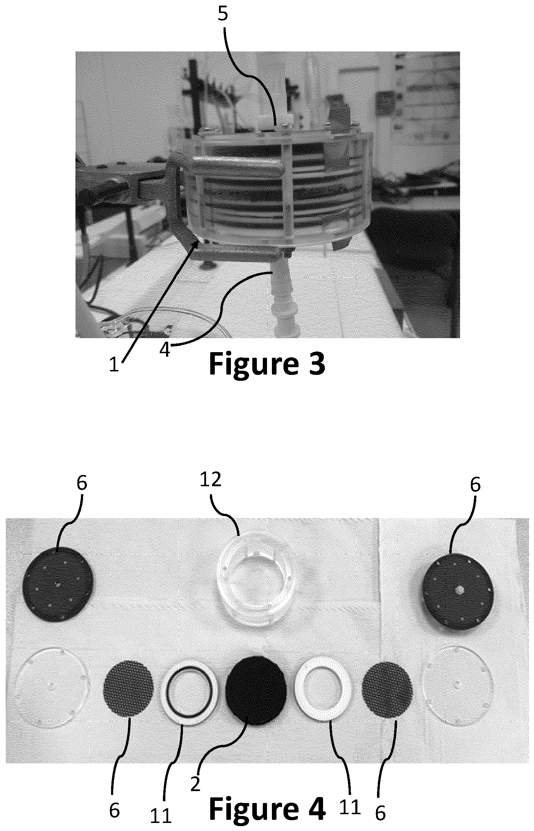

Un exemple de possible constitution du réacteur 1 est un empilement d'une anode 6, comme illustré figure 4, qui est composé d'une couche de Niobium (Nb) percée recouverte par du diamant dopé au bore, puis le séparateur 11 constitué d'une couche en téflon non conducteur, du filtre 2 constitué de couches de fibres de charbon actif, d'un autre séparateur 11 constitué d'une couche en téflon non conducteur, enfin une autre anode composée d'une couche de Niobium percée recouverte par du diamant dopé au bore, le tout entouré par un carter en polyméthacrylate de méthyle.

Un exemple possible d'une configuration est constitué d'un élément de polyméthacrylate de méthyle non conducteur, d'une grille de Nb recouverte de diamant dopé au bore, puis d'une couche en téflon non conducteur, une couche de fibres de charbon actif, une couche en téflon non conducteur, une grille de Nb recouverte de diamant dopé au bore, enfin un élément de polyméthacrylate de méthyle non conducteur, le tout entouré par un carter en polyméthacrylate de méthyle.

Un exemple de conditions opératoires du réacteur 1 au cours de la régénération :
- utilisation d'une configuration « sandwich », avec deux électrodes planes percées en diamant dopé au bore de chaque côté du tissu de charbon actif à régénérer ;
- conditions opératoires : I = 750 mA ; débit = 0.9 L/h ; volume de la solution utilisée et continuellement recirculée = 150 mL ; pH = 3 ; [Na2SO4] = 50 mM ; [Fe] = 0.15 mM ; barbotage continu d'air dans la solution ; temps de traitement de 3 h.

Conditions opératoires au cours de la filtration : 1 seule couche de fibres de charbon actif (diamètre = 5,5 cm) ; débit = 0.9 L/h ; concentration en acide clofibrique = 55 mg/L.

Un autre exemple de conditions opératoires au cours de la régénération :
- utilisation d'une configuration « sandwich », avec deux électrodes de type grille en diamant dopé au bore de chaque côté du lit de fibres de charbon actif à régénérer (10 couches), séparés par des couches de téflon non conducteur ;
- conditions opératoires : I = 600 mA ; débit = 4.0 L/h ; volume de la solution utilisée et continuellement recirculée = 400 mL ; pH naturel ; [Na2SO4] = 50 mM ; [Fe] = 0 mM ; pas de barbotage ; temps de traitement 36 h.

Conditions opératoires au cours de la filtration : 10 couches de fibres de charbon actif (diamètre = 5,5 cm) ; débit = 2.0 L/h ; concentration en phénol = 100 mg/L.

Un autre exemple de conditions opératoires au cours de la régénération :
- utilisation d'une configuration « sandwich », avec deux électrodes de type grille en diamant dopé au bore (BDD diamètre 5 cm, mailles larges) de chaque côté du lit de fibres de charbon actif à régénérer (10 couches, diamètre 5 cm), séparés par des couches de polyméthacrylate de méthylenon conducteur ;
- une anode en diamant dopé au bore et une cathode en acier inoxydable sont placées dans le volume tampon pour la recirculation. L'intensité du courant est de 300 mA dans le volume tampon et de 300 mA dans la chambre. La vitesse de filtration de la solution électrolytique est de 5 m/h. La solution électrolytique contient 50 mM de Na₂SO₄ et le pH est ajusté à 13 avec NaOH.

- conditions opératoires : I = 300 mA dans la chambre et 1 = 300 mA dans le volume tampon pour la recirculation; débit = 10.0 L/h ; volume de la solution utilisée et continuellement recirculée = 2 L ; pH 13 ; [Na2SO4] = 50 mM ; [Fe] = 0 mM ; pas de barbotage.
- conditions opératoires au cours de la filtration : 10 couches de fibres de charbon actif (diamètre = 5 cm) ; débit = 2.0 L/h ; concentration en phénol = 10 mg/L.

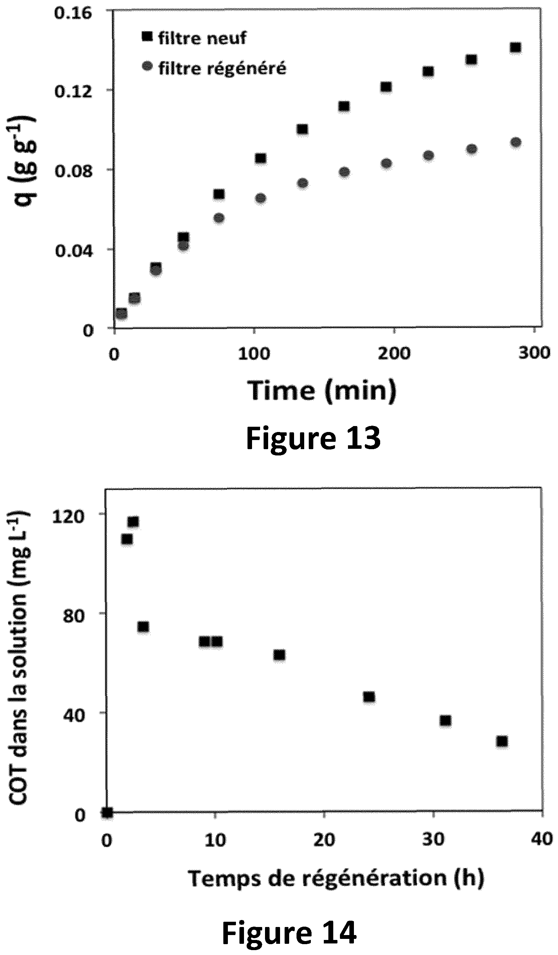

Lors d'études avec des conditions opératoires possibles de l'invention, les résultats présentés sur la Figure 13 montrent qu'une étape de régénération par oxydation anodique (sans utilisation de l'électro-Fenton) permet de recouvrir une partie importante de la capacité d'adsorption initiale du filtre 2. Les résultats présentés à la Figure 14 et la diminution du COT dans la solution au cours de la régénération montrent qu'il est aussi possible de minéraliser les composés désorbés. Les résultats des Figures 20, 21 et 22 montrent aussi que l'étape de régénération permet de recouvrer la capacité d'adsorption du filtre, et de dégrader et minéraliser complètement les polluants désorbés.

### Système 10 utilisant le réacteur 1

Le réacteur 1 décrit dans l'invention peut être utilisé dans un système 10 permettant la filtration de l'eau comprenant au moins un réacteur 1, et des moyens d'écoulement de l'eau reliés à l'entrée 4 et à la sortie 5.

Avantageusement, les circuits de recirculation 9 du fluide des réacteurs 1 sont reliés, de façon à présenter un volume tampon ouvert 9a commun.

Avantageusement, les réacteurs 1 sont placés en série ou en parallèle, par rapport à l'écoulement du fluide à traiter.

Les moyens d'écoulement peuvent être configurés, et/ou le réacteur 1 est pivoté de 180 degrés, pour que l'écoulement soit inversé entre le mode adsorption et le mode régénération.

Avantageusement, les moyens d'écoulement sont configurés pour que la vitesse de filtration (ratio entre le débit d'eau et la surface du filtre 2) soit comprise entre 0,2 m/h et 5 m/h, en mode filtration, et entre 0,2 et 20 m/h en mode régénération.

Dans une incarnation possible, plusieurs réacteurs 1 colonnes sont disposés de façon à pouvoir être en mode régénération dans au moins un réacteur 1, pendant que les autres réacteurs 1 sont en mode adsorption.

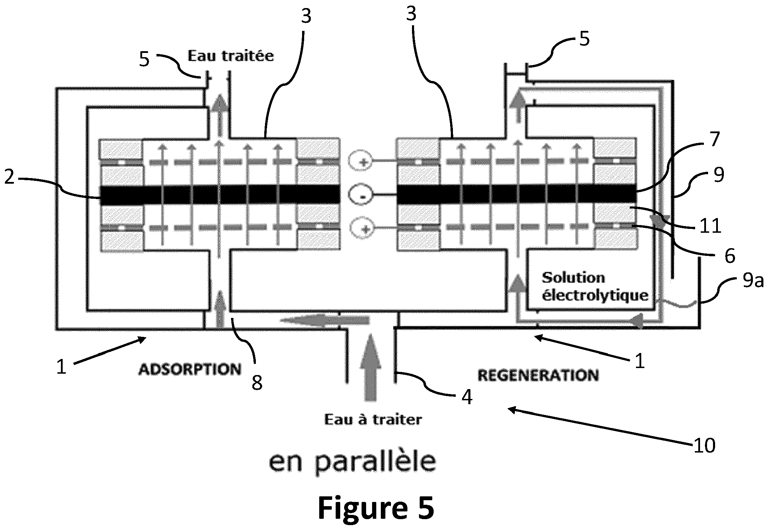

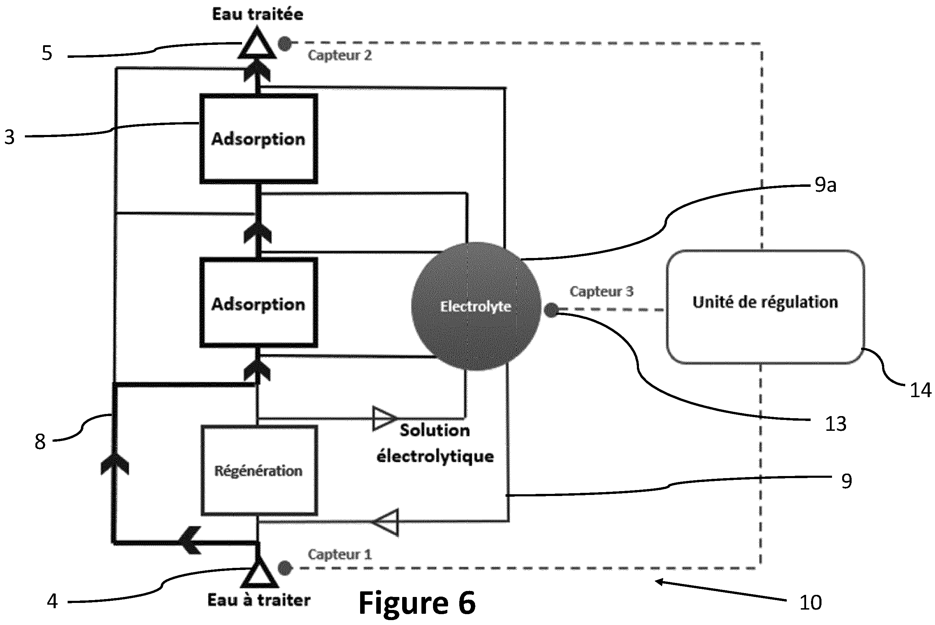

Les réacteurs 1 peuvent être mis en parallèle (figure 5) ou/et être mis en série (figure 6), et toujours avec un système d'écoulement d'eau permettant une filtration continue de l'eau, même lorsqu'un réacteur 1 est en mode régénération.

Avantageusement, c'est la qualité de l'eau globale en sortie qui est mesurée, pour pouvoir mesurer la quantité de polluants organiques en sortie. Avantageusement, lorsque la qualité de l'eau en sortie baisse, on réactive un filtre propre/régénéré (qui était jusqu'alors plus utilisé pour l'adsorption), et on passe en régénération un filtre sale.

Avantageusement, le système 10 possède plusieurs capteurs 13. Le système 10 peut avoir un capteur 13 à l'entrée 4 du système 10 et un second capteur 13 à la sortie 5 du système 10.

Dans une autre incarnation, le système 10 possède un capteur 13 à chaque entrée 4 et à chaque sortie 5 des réacteurs 1 présents dans le système 10.

Avantageusement, toutes les entrées 4 et toutes les sorties 5 des réacteurs 1 présents dans le système 10, sont reliées au volume tampon 9a, formant ainsi le circuit de recirculation.

Avantageusement, tous les capteurs 13 du système 10 sont reliés à une unité de régulation 14, permettant de modifier la circulation de l'eau à filtrer dans le système 10, au moyen de vannes, pour permettre à certains réacteurs d'être en mode régénération, en fonction de la quantité de polluant organiques sortant. L'unité de régulation 14 contrôle le circuit de l'eau, permettant que la solution électrolytique contenue dans le volume tampon 9a ne soit mélangée avec l'eau à filtrer. L'unité de régulation 14 contrôle les moyens d'alimentation en courant électrique des anodes 6 et des cathodes 7.

Avantageusement, l'unité de régulation 14 récupère les informations suivantes : la qualité eau à traiter, la qualité eau traitée, la qualité électrolyte (par exemple avec des capteurs 13 d'absorbance UV), et l'unité de régulation 14 actionne les vannes (circuit hydraulique), régule l'intensité du courant pour la régénération et contrôle l'alimentation électrique.

Les réacteurs 1 colonnes peuvent passer en mode régénération, lorsque les filtres 2 laissent passer au moins 5% des polluants organiques.

Avantageusement, le système 10 de filtration / régénération est capable de traiter au moins une dizaine de litres par heure.

### Résultats

### I - Sur le matériau d'anode 6, le circuit de recirculation 9 et l'hydrodynamique permettant d'éviter la rétention des bulles de gaz générées au cours de l'électrolyse

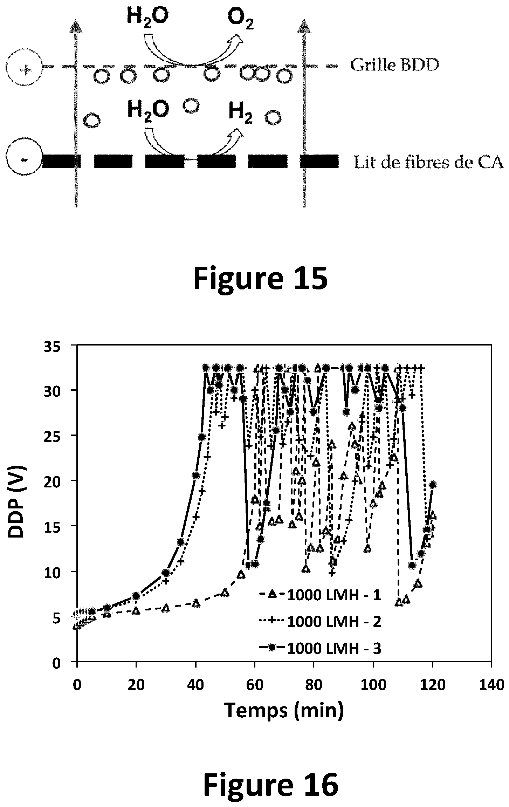

La problématique de rétention de gaz dans l'espace inter-électrode au cours de l'électrolyse provient de la génération de bulles d'O₂ et de bulles d' H₂ lors de l'oxydation de l'eau à l'anode et de sa réduction à la cathode, respectivement. Selon les conditions hydrodynamiques et la nature des matériaux d'électrodes utilisés, les bulles de gaz formées au niveau des électrodes peuvent ne pas être capable de passer au travers de l'électrode située au-dessus de l'endroit où elles sont produites. Cela peut amener à une accumulation de gaz au niveau de l'électrode supérieure. Un gaz étant un isolant électrique, ces bulles constituent une forte résistance au passage du courant. Cette accumulation de gaz va réduire la surface électro-active de l'électrode (seule la partie de l'électrode à la surface de laquelle il n'y a pas d'accumulation de gaz va être active), et augmenter fortement la différence de potentiel (DDP) entre les deux électrodes. Cette problématique est représentée schématiquement sur la Figure 15.

Une première série de tests a consisté à suivre la différence de potentiel au niveau du réacteur, lors du procédé d'électrolyse. La première configuration testée consistait à un empilement d'un lit de fibres de charbon actifs (en-dessous) et d'une grille de BDD avec des mailles serrées (au-dessus), comme sur la Figure 15. Les mailles serrées de cette grille ont une forme de losange et les dimensions suivantes : grande diagonale : 6 mm, petite diagonale : 3,7 mm. Cela représente une surface de 0,11 cm².

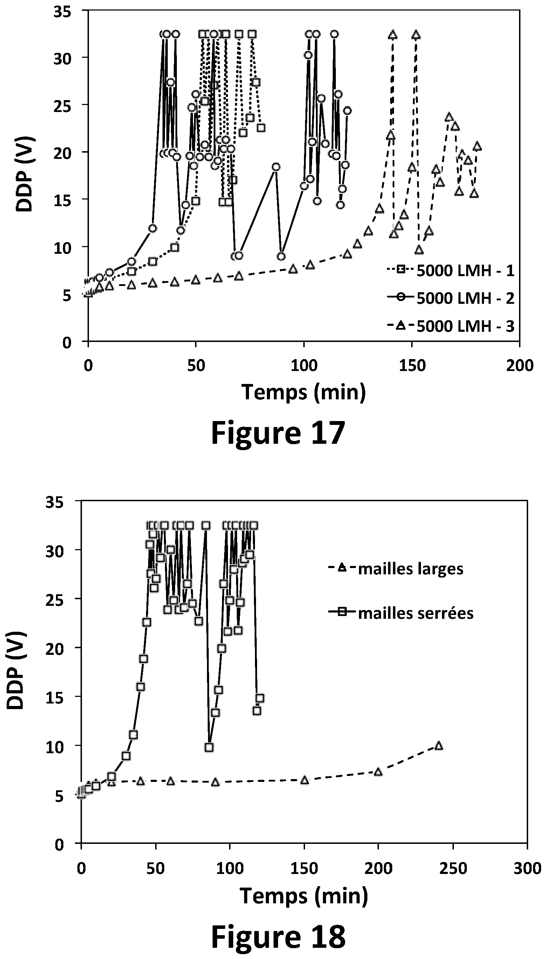

La Figure 16 présente les résultats obtenus au cours de trois tests différents réalisés avec un flux de 1000 L.m⁻².h⁻¹, soit une vitesse de filtration de 1 m.h⁻¹. La Figure 17 présente les résultats obtenus au cours de trois tests différents, réalisés avec un flux de 5000 L.m⁻².h⁻¹, soit une vitesse de filtration de 5 m.h⁻¹. Une augmentation rapide de la DDP est observée, en raison de la rétention de gaz dans l'espace inter-électrode, notamment par la rétention au niveau de la grille de BDD avec des mailles serrées des bulles de gaz formées à la cathode. Une fluctuation est ensuite observée, en raison de la libération périodique de quelques bulles de gaz lorsqu'une trop grande quantité a été accumulée. Cependant, la DDP reste globalement à un niveau très élevé. Comme observé sur la Figure 17, l'augmentation de la vitesse de filtration ne résout pas significativement cette problématique. Il est à noter que ces résultats n'étaient pas attendus. En effet, la taille de ces mailles serrées reste tout de même largement supérieure à la taille des (micro)bulles générées au niveau des électrodes. Cependant, les interactions des bulles avec la surface du matériau et des phénomènes de coalescence des bulles mènent à cet effet néfaste pour le procédé.

Afin de résoudre ce problème, il a été testé l'utilisation d'une grille de BDD avec des mailles plus larges, sur la figure 18. Les mailles plus larges de cette grille ont une forme de losange et les dimensions suivantes : grande diagonale : 12,5 mm, petite diagonale : 7,3 mm. Cela représente une surface libre de 0,46 cm². Les résultats de ce test sont montrés au niveau de la Figure 18. L'utilisation de cette grille de BDD avec des mailles plus larges évite l'accumulation de bulles au niveau de la grille de BDD. Les bulles de gaz sont capables de passer au travers de ce matériau, sans s'y accumuler. L'utilisation de cette grille résout donc la problématique de rétention de gaz, lorsque le matériau d'anode est placé au-dessus du filtre de charbon actif.

Une autre série de tests a concerné une autre configuration, consistant en un empilement d'une grille de BDD avec des mailles serrées (en-dessous) et d'un lit de fibres de charbon actif (au-dessus). Dans ce cas, la problématique majeure est l'accumulation des bulles (formées à la grille de BDD), au niveau du lit de fibre de charbon actif. Dans ce cas, il n'est pas possible de jouer fortement sur la nature du lit de fibres de charbon actif, et notamment sa porosité, car cela constitue l'élément clé pour l'étape d'adsorption. Dans ce cas où l'on ne peut pas jouer sur la nature du matériau, il a donc été recherché une solution au niveau des conditions opératoires du procédé. Il s'est avéré qu'en augmentant le flux de la solution électrolytique au travers du filtre, il était alors possible d'éviter une trop forte accumulation de bulles au niveau des fibres, et donc une trop forte augmentation de la DDP. Ces résultats sont montrés à la Figure 19. Une vitesse de filtration de 1 m.h⁻¹ implique une forte augmentation de la DDP, puis une fluctuation, en raison de la libération périodique de quelques bulles de gaz lorsqu'une trop grande quantité a été accumulée. Ce fonctionnement n'est pas viable pour l'application du procédé. Cependant, en augmentant la vitesse de filtration à 5 m.h⁻¹, il est alors possible de stabiliser l'augmentation à une valeur viable d'environ 10 V. La vitesse de filtration (i.e. le flux) de la solution électrolytique est donc un paramètre opératoire clé, permettant d'éviter la rétention de gaz au niveau du lit de fibres de charbon actif lorsque celui-ci se situe au-dessus d'une contre-électrode. Cela s'explique par l'augmentation de la pression au niveau du filtre, permettant de favoriser le passage des bulles de gaz au travers du filtre. D'autres paramètres pourraient jouer sur cette pression au niveau du filtre, tels que l'épaisseur du lit de charbon actif, ou la nature (notamment la structure poreuse) du lit de charbon actif. La structure poreuse du lit de charbon actif pourrait aussi jouer sur la pression nécessaire à atteindre pour faciliter le passage des bulles au travers.

### II - Sur la composition de la solution électrolytique (notamment l'ajustement du pH)

Des tests ont montré que l'ajustement du pH de la solution pourrait fortement améliorer l'efficacité du procédé.

L'idée est de favoriser la désorption des composés adsorbés au niveau de la cathode, par répulsion électrostatique au cours de l'électrolyse. En effet, à pH basique, les polluants vont se retrouver sous forme déprotonée (chargés négativement), ce qui va favoriser les phénomènes de répulsion électrostatique lorsque l'on polarise le filtre de charbon actif en tant que cathode (potentiel négatif). En favorisant la désorption, on favorise aussi l'élimination des composés, car le procédé d'électro-oxydation est plus efficace énergétiquement lorsque l'on atteint des concentrations plus élevées en composés organiques dans la solution (moins de limitation par le transport de matière).

Les résultats de la Figure 20 et 21 montrent l'évolution au cours de la régénération de la concentration en phénol et en carbone organique total, respectivement. Un filtre de 10 couches de fibres de charbon actif a été utilisé. Une anode de type grille de BDD (taille de maille large) est placée en aval du filtre, une autre en amont. La surface de filtration est de 19,6 cm². Une anode en BDD et une cathode en acier inoxydable sont placées dans le volume tampon pour la recirculation. L'intensité du courant est de 300 mA dans le volume tampon, et de 300 mA dans la chambre. La vitesse de filtration de la solution électrolytique est de 5 m/h. La solution électrolytique contient 50 mM de Na₂SO₄ et son pH a été ajusté à 13 avec NaOH. L'étape d'adsorption a été réalisée avec une concentration de phénol de 10 mg/L et un débit de 2 L/h.

On observe une augmentation des concentrations en phénol et en carbone organique, lorsque les phénomènes de désorption sont prédominants, puis une diminution grâce à la dégradation et la minéralisation dans la solution des composés désorbés. Les résultats de la Figure 20 montrent que la capacité d'adsorption du filtre pour le phénol a été entièrement recouvrée grâce à cette étape de régénération.

## Revendications

1. Réacteur (1) permettant la filtration frontale en continu d'ur fluide en écoulement par l'adsorption de polluants sur un filtre (2), puis une électrolyse pour la régénération du filtre (2) et la dégradation et la minéralisation des polluants organiques, le réacteur (1) comportant :
• une chambre (3), avec au moins une entrée (4) délivrant un fluide dans la chambre (3) et au moins une sortie (5) permettant d'évacuer le fluide de la chambre (3) ;
• des moyens d'alimentation en courant électrique ;
• un circuit de circulation (8) d'un fluide à traiter par adsorption des polluants sur le filtre (2), permettant le passage du fluide à traiter au travers de la chambre (3) ;
• un circuit de recirculation (9) d'une solution électrolytique pour l'électrolyse, reliant la sortie (5) à l'entrée (4), et passant par un volume tampon ouvert (9a) permettant l'évacuation des bulles de gaz générées au cours de l'électrolyse ;
• des moyens d'entrainement du fluide ;
dans lequel la totalité du fluide à traiter pendant la filtration, et de la solution électrolytique et des polluants organiques désorbés pendant l'électrolyse, passent successivement au travers de l'ensemble des éléments de la chambre (3) qui comporte au moins:
• un filtre (2) poreux présentant au moins une couche de charbon actif permettant l'adsorption des polluants organiques lors de l'écoulement du fluide à traiter,
la/les couches étant reliée(s) électriquement aux moyens d'alimentation en courant électrique, afin de polariser la/les couche(s) uniquement lors de l'électrolyse, le filtre (2) étant la cathode au cours de l'électrolyse et du passage de la solution électrolytique et des polluants organiques désorbés permettant la régénération du filtre et l'élimination des polluants organiques ;
• une anode (6), en amont ou en aval du filtre (2), comprenant au moins une couche de matériau d'anode et des ouvertures permettant l'écoulement du fluide lors de la filtration et de la solution électrolytique lors de l'électrolyse,
le matériau étant relié électriquement aux moyens d'alimentation du courant électrique, afin de le polariser en tant qu'anode au cours de l'électrolyse pour la dégradation et la minéralisation des polluants organiques désorbés du filtre (2),
l'anode (6) et le filtre (2) sont placés horizontalement au sein de la chambre (3) placée verticalement du réacteur, dans lequel le circuit de recirculation (9) assure un écoulement ascensionnel de la solution électrolytique et des polluants organiques désorbés au sein de la chambre (3) qui comprend l'anode (6) et le filtre (2), afin de favoriser l'évacuation des bulles de gaz formées au cours de l'électrolyse dans le volume tampon (9a) du circuit de recirculation (9) ;
le réacteur (1) comprenant une unité de régulation (14) reliée à des électrovannes des circuits de circulation (8) et de recirculation (9), aux moyens d'entrainement du fluide et aux moyens d'alimentation en courant électrique de façon à pouvoir mettre en place un mode de fonctionnement filtration ou électrolyse, par action de l'unité de régulation (14) sur les circuits de circulation (8) et de recirculation (9) ainsi que sur les moyens d'entrainement du fluide et sur les moyens d'alimentation en courant électrique, pour fonctionner suivant deux modes :
• en mode filtration continue du fluide qui se déplace dans le circuit de circulation (8) pour l'adsorption des polluants organiques sur le filtre (2), sans alimentation électrique, sans recirculation du fluide, ou
• en mode électrolyse, pour la régénération du filtre (2) et la dégradation et la minéralisation des polluants organiques, par application d'un courant électrique entre le filtre (2) utilisé en tant que cathode et l'anode (6), avec recirculation continue de la solution électrolytique et des polluants organiques désorbés à travers le filtre (2) et l'anode (6) de la chambre puis dans le circuit de recirculation (9).

2. Réacteur (1) selon la revendication 1, dans lequel l'anode (6) présente un matériau percé ou une grille sur laquelle est déposé le matériau d'anode.

3. Réacteur (1) selon la revendication 1 ou 2, dans lequel lorsqu'une électrode placée en aval d'une autre par rapport au sens d'écoulement du fluide au cours de la régénération est :
- l'anode (6), alors l'anode (6) comporte un matériau percé ou une grille avec ouvertures/mailles supérieures à 0,15 cm² permettant le passage des bulles de gaz formées au cours de l'électrolyse ; ou
- le filtre (2) utilisé en tant que cathode, alors les moyens d'entrainement du fluide sont configurés pour permettre d'exercer une pression sur cette électrode aval de façon à réaliser le passage des bulles de gaz formées au cours de l'électrolyse, au travers de cette électrode aval.

4. Réacteur (1) selon l'une quelconque des revendications 1 à 3, dans lequel le réacteur présente un matériau d'anode en diamant dopé au bore ou en oxyde de titane sous-stoechiométrique permettant la dégradation et la minéralisation des composés organiques.

5. Réacteur (1) selon l'une quelconque des revendications 1 à 4, dans lequel la au moins une couche de charbon actif est formée de fibres de charbon actif.

6. Réacteur (1) selon l'une quelconque des revendications 1 à 4, dans lequel la au moins une couche de charbon actif est formée de grains de charbon actif.

7. Réacteur (1) selon l'une quelconque des revendications 1 à 6, dans lequel la chambre (3) comprend plusieurs couples d'anode (6) / filtre (2), montés en série, les deux faces d'une électrode pouvant être polarisées lors de l'électrolyse.

8. Réacteur (1) selon l'une quelconque des revendications 1 à 7, dans lequel au moins une anode, au moins une cathode et des moyens d'alimentation en courant électrique sont compris dans le volume tampon ouvert (9a) afin de favoriser la dégradation et la minéralisation des polluants au cours de l'électrolyse, telle qu'une anode comprenant au moins une couche de diamant dopé au bore ou en oxyde de titane sous-stoechiométrique.

9. Réacteur (1) selon l'une quelconque des revendications 1 à 8, dans lequel les moyens d'entrainement du fluide sont configurés pour permettre au circuit de recirculation (9) d'atteindre une vitesse de filtration de la solution électrolytique au travers du filtre (2) supérieure à 2 m/h au cours de l'électrolyse.

10. Réacteur (1) selon l'une quelconque des revendications 1 à 9, dans lequel l'unité de régulation est apte à inverser le sens de la circulation de l'écoulement dans le réacteur entre le passage du fluide dans le réacteur en mode filtration, et le passage de la solution électrolytique en mode électrolyse.

11. Réacteur (1) selon l'une quelconque des revendications 1 à 10, dans lequel l'unité de régulation est reliée à un capteur de mesure de la concentration en polluants au niveau de la sortie (5), le mode électrolyse étant mis en place lorsque la concentration en polluants passe au-dessus d'une valeur donnée, le mode filtration étant mis en place lorsque la concentration en polluants passe en-dessous d'une valeur donnée.

12. Réacteur (1) selon l'une quelconque des revendications 1 à 11, dans lequel le fluide est un gaz ou un liquide tel qu'un liquide aqueux.

13. Réacteur (1) selon l'une quelconque des revendications 1 à 12, dans lequel le réacteur (1) présente dans un corps (12), montés en série :
· un élément d'entrée de l'eau,
· une première couche d'anode non active en appui sur un premier support,
· un premier élément séparateur (11) non conducteur, avec joint d'étanchéité en contact au moins sur une cathode (7), la cathode présentant plusieurs couches de fibres poreuses de charbon actif,
· un deuxième élément séparateur (11) non conducteur, avec joint d'étanchéité en contact au moins sur la cathode (7),
· une deuxième couche d'anode non active reposant sur un deuxième support,
· un élément de sortie de l'eau.

14. Système (10) comprenant plusieurs réacteurs (1) selon l'une quelconque des revendications 1 à 13.

15. Système (10) selon la revendication 14, dans lequel les circuits de recirculation (9) du fluide des réacteurs (1) sont reliés de façon à présenter un volume tampon ouvert (9a) commun.

16. Système (10) selon l'une des revendications 14 ou 15, dans lequel les réacteurs (1) sont placés en série ou en parallèle par rapport à l'écoulement du fluide à traiter.

## Patentansprüche

1. Reaktor (1), der die kontinuierliche Frontalfiltration eines fließenden Fluids durch Adsorption von Schadstoffen auf einem Filter (2), dann eine Elektrolyse zur Regeneration des Filters (2) und zum Abbau und zur Mineralisierung der organischen Schadstoffe gestattet, wobei der Reaktor (1) aufweist:
- eine Kammer (3) mit mindestens einem Einlass (4), der ein Fluid in die Kammer (3) liefert, und mindestens einem Auslass (5), der es gestattet, das Fluid aus der Kammer (3) abzuleiten;
- Mittel zur Stromversorgung;
- einen Zirkulationskreis (8) eines durch Adsorption von Schadstoffen auf dem Filter (2) zu behandelnden Fluids, der den Durchgang des zu behandelnden Fluids durch die Kammer (3) gestattet;
- einen Rezirkulationskreis (9) einer Elektrolytlösung für die Elektrolyse, der den Auslass (5) mit dem Einlass (4) verbindet und durch ein offenes Puffervolumen (9a) führt, um die während der Elektrolyse erzeugten Gasblasen abzuleiten;
- Fluidfördermittel;
- wobei das gesamte während der Filtration zu behandelnde Fluid und der Elektrolytlösung und der während der Elektrolyse desorbierten organischen Schadstoffe nacheinander durch alle Elemente der Kammer (3) strömen, die mindestens aufweist:
- einen porösen Filter (2), der mindestens eine Aktivkohleschicht aufweist, die die Adsorption der organischen Schadstoffe beim Fließen des zu behandelnden Fluids gestattet, wobei die Schicht(en) elektrisch mit den Mitteln zur Stromversorgung verbunden ist(sind), um die Schicht(en) nur bei der Elektrolyse zu polarisieren, wobei der Filter (2) die Kathode während der Elektrolyse und des Durchgangs der Elektrolytlösung und der desorbierten organischen Schadstoffe ist, die die Regeneration des Filters und die Entfernung der organischen Schadstoffe gestatten;
- eine Anode (6) vor oder nach dem Filter (2), die mindestens eine Schicht Anodenmaterial und Öffnungen umfasst, die das Fließen des Fluid bei der Filtration und der Elektrolytlösung bei der Elektrolyse gestatten, wobei das Material elektrisch mit den Mitteln zur Stromversorgung verbunden ist, um es während der Elektrolyse als Anode für den Abbau und die Mineralisierung der desorbierten organischen Schadstoffe des Filters (2) zu polarisieren, wobei die Anode (6) und der Filters (2) horizontal in der vertikal angeordneten Kammer (3) des Reaktors platziert sind, wobei der Rezirkulationskreis (9) einen Aufwärtsstrom der Elektrolytlösung und der desorbierten organischen Schadstoffe innerhalb der Kammer (3) gewährleistet, die die Anode (6) und den Filter (2) umfasst, um das Ableiten der während der Elektrolyse gebildeten Gasblasen in das Puffervolumen (9a) des Rezirkulationskreises (9) zu begünstigen; wobei der Reaktor (1) eine Regeleinheit (14) umfasst, die mit Magnetventilen des Zirkulationskreises (8) und des Rezirkulationskreises (9), den Fluidfördermitteln und den Mitteln zur Stromversorgung verbunden ist, so dass durch das Einwirken der Regeleinheit (14) auf den Zirkulationskreis (8) und den Rezirkulationskreis (9) sowie auf die Fluidfördermittel und auf die Mittel zur Stromversorgung ein Filtrations- oder Elektrolyse-Betriebsmodus eingerichtet werden kann, um nach zwei Modi zu arbeiten:
- im kontinuierlichen Filtrationsmodus des Fluids, das sich im Zirkulationskreis (8) zur Adsorption der organischen Schadstoffe auf dem Filter (2) verlagert, ohne Stromversorgung, ohne Rezirkulation des Fluids, oder
- im Elektrolysemodus zur Regeneration des Filters (2) und zum Abbau und zur Mineralisierung der organischen Schadstoffe durch Anlegen eines elektrischen Stroms zwischen dem als Kathode verwendeten Filter (2) und der Anode (6), mit kontinuierlicher Rezirkulation der Elektrolytlösung und der desorbierten organischen Schadstoffe durch den Filter (2) und die Anode (6) der Kammer und dann in den Rezirkulationskreis (9).

2. Reaktor (1) nach Anspruch 1, wobei die Anode (6) ein durchbrochenes Material oder ein Gitter aufweist, auf dem das Anodenmaterial abgelegt ist.

3. Reaktor (1) nach Anspruch 1 oder 2, wobei, wenn eine Elektrode, die nach einer anderen im Verhältnis zur Strömungsrichtung des Fluids während der Regeneration platziert ist:
- die Anode (6) ist, die Anode (6) ein durchbrochenes Material oder ein Gitter mit Öffnungen/Maschenweiten von mehr als 0,15 cm² aufweist, die den Durchgang der während der Elektrolyse gebildeten Gasblasen gestatten; oder
- der Filter (2) als Kathode verwendet wird, die Fluidfördermittel ausgelegt sind, um die Ausübung eines Drucks auf diese nachgelagerte Elektrode derart auszuüben, dass die während der Elektrolyse gebildeten Gasblasen diese nachgelagerte Elektrode passieren.

4. Reaktor (1) nach einem der Ansprüche 1 bis 3, wobei der Reaktor ein Anodenmaterial aus bordotiertem Diamant oder aus substöchiometrischen Titanoxid aufweist, das den Abbau und die Mineralisierung der organischen Verbindungen gestattet.

5. Reaktor (1) nach einem der Ansprüche 1 bis 4, wobei die mindestens eine Aktivkohleschicht aus Aktivkohlefasern gebildet ist.

6. Reaktor (1) nach einem der Ansprüche 1 bis 4, wobei die mindestens eine Aktivkohleschicht aus Aktivkohlekörnern gebildet ist.

7. Reaktor (1) nach einem der Ansprüche 1 bis 6, wobei die Kammer (3) mehrere Paare Anode (6)/Filter (2) umfasst, die in Reihe angebracht sind, wobei die beiden Seiten einer Elektrode bei der Elektrolyse polarisiert werden können.

8. Reaktor (1) nach einem der Ansprüche 1 bis 7, wobei mindestens eine Anode, mindestens eine Kathode und Mittel zur Stromversorgung im offenen Puffervolumen (9a) enthalten sind, um den Abbau und die Mineralisierung der Schadstoffe während der Elektrolyse zu begünstigen, wie z. B. eine Anode, die mindestens eine bordotierte Diamantschicht oder aus substöchiometrischem Titanoxid umfasst.

9. Reaktor (1) nach einem der Ansprüche 1 bis 8, wobei die Fluidfördermittel ausgelegt sind, um dem Rezirkulationskreis (9) zu gestatten, während der Elektrolyse eine Filtrationsgeschwindigkeit der Elektrolytlösung durch den Filter (2) von mehr als 2 m/h zu erreichen.

10. Reaktor (1) nach einem der Ansprüche 1 bis 9, wobei die Regeleinheit in der Lage ist, die Zirkulationsrichtung des Fließens im Reaktor zwischen dem Durchgang des Fluids in den Reaktor im Filtrationsmodus und dem Durchgang der Elektrolytlösung im Elektrolysemodus umzukehren.

11. Reaktor (1) nach einem der Ansprüche 1 bis 10, wobei die Regeleinheit mit einem Sensor zur Messung der Schadstoffkonzentration im Bereich des Auslasses (5) verbunden ist, wobei der Elektrolysemodus durchgeführt wird, wenn die Schadstoffkonzentration einen bestimmten Wert überschreitet, wobei der Filtrationsmodus durchgeführt wird, wenn die Schadstoffkonzentration unter einen bestimmten Wert fällt.

12. Reaktor (1) nach einem der Ansprüche 1 bis 11, wobei das Fluid ein Gas oder eine Flüssigkeit wie eine wässrige Flüssigkeit ist.

13. Reaktor (1) nach einem der Ansprüche 1 bis 12, wobei der Reaktor (1) in einem Körper (12) in Reihe geschaltet aufweist:
- ein Wassereinlasselement,
- eine erste nicht aktive Anodenschicht, die auf einem ersten Träger aufliegt,
- ein erstes nichtleitendes Trennelement (11) mit mindestens einer eine Kathode (7) berührenden Dichtung, wobei die Kathode mehrere Schichten poröser Aktivkohlefasern aufweist, ein zweites nichtleitendes Trennelement (11) mit mindestens einer die Kathode (7) berührenden Dichtung,
- eine zweite nicht aktive Anodenschicht, die auf einem zweiten Träger ruht,
- ein Wasserauslasselement.

14. System (10), das mehrere Reaktoren (1) nach einem der Ansprüche 1 bis 13 umfasst.

15. System (10) nach Anspruch 14, wobei die Rezirkulationskreise (9) des Reaktorfluids (1) derart verbunden sind, dass sie ein gemeinsames offenes Puffervolumen (9a) aufweisen.

16. System (10) nach einem der Ansprüche 14 oder 15, wobei die Reaktoren (1) in Reihe oder parallel im Verhältnis zur Fließrichtung des zu behandelnden Fluids angeordnet sind.

## Claims

1. A reactor (1) for continuously frontally filtering a flowing fluid by adsorption of pollutants on a filter (2), then electrolysis for regeneration of the filter (2) and degradation and mineralisation of organic pollutants, the reactor (1) including:
- a chamber (3), with at least one inlet (4) delivering a fluid into the chamber (3) and at least one outlet (5) for discharging the fluid from the chamber (3);
- electric current supply means;
- a circuit (8) for circulating a fluid to be treated by adsorption of pollutants on the filter (2), for passing the fluid to be treated through the chamber (3);
- a circuit (9) for recirculating an electrolyte solution for electrolysis, connecting the outlet (5) to the inlet (4), and passing through an open buffer volume (9a) for discharging gas bubbles generated during the electrolysis;
- fluid drive means;
- wherein the entire fluid to be treated during filtration, and the electrolyte solution and organic pollutants desorbed during electrolysis, successively pass through all of the elements of the chamber (3) which includes at least:
- a porous filter (2) having at least one activated carbon layer for adsorbing organic pollutants when the fluid to be treated is flowing, the layer(s) being electrically connected to the electric current supply means, in order to polarise the layer(s) only during electrolysis, the filter (2) being the cathode during the electrolysis and passage of the electrolyte solution and desorbed organic pollutants for regenerating the filter and removing the organic pollutants;
- an anode (6), upstream or downstream of the filter (2), comprising at least one layer of anode material and openings for flowing the fluid during filtration and the electrolyte solution during electrolysis, the material being electrically connected to the electric current supply means, in order to polarise it as an anode during electrolysis for the degradation and mineralisation of the organic pollutants desorbed from the filter (2), the anode (6) and the filter (2) are placed horizontally within the vertically placed chamber (3) of the reactor, wherein the recirculation circuit (9) ensures ascending flow of the electrolyte solution and the desorbed organic pollutants within the chamber (3) which comprises the anode (6) and the filter (2), in order to promote discharge of gas bubbles formed during the electrolysis into the buffer volume (9a) of the recirculation circuit (9); the reactor (1) comprising a regulation unit (14) connected to solenoid valves of the circulation (8) and recirculation (9) circuits, the fluid drive means and the electric current supply means so as to be able to set up a filtration or electrolysis operating mode, by action of the regulation unit (14) on the circulation (8) and recirculation (9) circuits as well as on the fluid drive means and on the electric current supply means, to operate according to two modes:
- in continuous filtration mode of the fluid which displaces in the circulation circuit (8) for the adsorption of organic pollutants on the filter (2), without electric power supply, without recirculation of the fluid, or
- in electrolysis mode, for regeneration of the filter (2) and degradation and mineralisation of organic pollutants, by applying an electric current between the filter (2) used as a cathode and the anode (6), with continuously recirculating the electrolyte solution and the desorbed organic pollutants through the filter (2) and the anode (6) of the chamber and then into the recirculation circuit (9).

2. The reactor (1) according to claim 1, wherein the anode (6) has a perforated material or a grid onto which the anode material is deposited.

3. The reactor (1) according to claim 1 or 2, wherein when an electrode placed downstream of another one with respect to the flow direction of the fluid during regeneration is:
- the anode (6), then the anode (6) includes a perforated material or a grid with openings/meshes greater than 0.15 cm² for passing gas bubbles formed during the electrolysis; or
- the filter (2) used as a cathode, then the fluid drive means are configured to allow exerting a pressure on this downstream electrode so as to achieve passage of gas bubbles formed during the electrolysis, through this downstream electrode.

4. The reactor (1) according to any of claims 1 to 3, wherein the reactor has a sub-stoichiometric boron-doped diamond or titanium oxide anode material for degrading and mineralising organic compounds.

5. The reactor (1) according to any of claims 1 to 4, wherein the at least one activated carbon layer is formed of activated carbon fibres.

6. The reactor (1) according to any of claims 1 to 4, wherein the at least one activated carbon layer is formed of activated carbon grains.

7. The reactor (1) according to any of claims 1 to 6, wherein the chamber (3) comprises several anode (6)/filter (2) pairs, mounted in series, the two faces of an electrode being able to be polarised during electrolysis.

8. The reactor (1) according to any of claims 1 to 7, wherein at least one anode, at least one cathode and electric current supply means are included in the open buffer volume (9a) in order to promote degradation and mineralisation of pollutants during electrolysis, such as an anode comprising at least one layer of sub-stoichiometric boron doped diamond or titanium oxide.

9. The reactor (1) according to any of claims 1 to 8, wherein the fluid drive means are configured to allow the recirculation circuit (9) to achieve a filtration rate of the electrolyte solution through the filter (2) greater than 2 m/h during the electrolysis.

10. The reactor (1) according to any of claims 1 to 9, wherein the regulation unit is able to reverse the circulation direction of the flow in the reactor between shifting the fluid in the reactor into filtration mode, and shifting the electrolyte solution into electrolysis mode.

11. The reactor (1) according to any of claims 1 to 10, wherein the regulation unit is connected to a pollutant concentration measurement sensor at the outlet (5), the electrolysis mode being set up when the pollutant concentration goes above a given value, the filtration mode being set up when the pollutant concentration goes below a given value.

12. The reactor (1) according to any of claims 1 to 11, wherein the fluid is a gas or a liquid such as an aqueous liquid.

13. The reactor (1) according to any of claims 1 to 12, wherein the reactor (1) has in a body (12), being mounted in series:
- a water inlet element,
- a first non-active anode layer bearing on a first support,
- a first non-conductive separator element (11), with a seal in contact at least on a cathode (7), the cathode having several layers of porous activated carbon fibres, a second non-conductive separator element (11), with a seal in contact at least on the cathode (7),
- a second non-active anode layer resting on a second support,
- a water outlet element.

14. A system (10) comprising a plurality of reactors (1) according to any of claims 1 to 13.

15. The system (10) according to claim 14, wherein the circuits (9) for recirculating the fluid of the reactors (1) are connected so as to have a common open buffer volume (9a).

16. The system (10) according to one of claims 14 or 15, wherein the reactors (1) are placed in series or in parallel with respect to the flow of the fluid to be treated.
